# FASCICULE DE BREVET EUROPEEN

(11) **EP 4 251 397 B1**
(45) Date de publication et mention de la délivrance du brevet: **22.01.2025**
(21) Numéro de dépôt: 21778188.9
(22) Date de dépôt: 07.09.2021
(51) Int. Cl.: B29C 48/35, B29C 48/21, B29C 48/49, B29C 48/12, B29C 48/30, B29C 48/305, B29D 30/52, B60C 11/24, B29C 48/07

(54) **INSTALLATION DE COEXTRUSION ET PROCÉDÉ PERMETTANT DE REALISER UNE BANDE DE ROULEMENT PRESENTANT DES INSERTS DE RENFORT ENFOUIS EN PROFONDEUR DANS LES BLOCS DE SCULPTURE**
KOEXTRUSIONSANLAGE UND VERFAHREN ZUR HERSTELLUNG EINER LAUFFLÄCHE MIT IN DER TIEFE IN DEN LAUFFLÄCHENPROFILBLÖCKEN EINGEBETTETEN VERSTÄRKUNGSEINLAGEN
COEXTRUSION INSTALLATION AND PROCESS FOR PRODUCING A TREAD HAVING REINFORCING INSERTS EMBEDDED AT DEPTH IN THE TREAD PATTERN BLOCKS

(30) Priorité: 27.11.2020 FR 2012249
(43) Date de publication de la demande: 04.10.2023
(73) Titulaire: COMPAGNIE GENERALE DES ETABLISSEMENTS MICHELIN, 63000 Clermont-Ferrand (FR)
(72) Inventeur: ROUBY, Mickael, 63040 CLERMONT-FERRAND CEDEX 9 (FR); DENIS, Dominique, 63040 CLERMONT-FERRAND CEDEX 9 (FR)
(74) Mandataire: M.F.P. Michelin
(86) Numéro de dépôt international: PCT/FR2021/051527
(87) Numéro de publication internationale: WO 2022/112666

(56) Documents cités:
- WO-A1-2012/028429
- WO-A1-2017/109392
- WO-A1-2017/146734
- WO-A1-2019/002782

## Description

La présente invention concerne le domaine général des installations de coextrusion permettant de réaliser des profilés, notamment des profilés à base de mélanges élastomériques, qui peuvent par exemple être destinés à la fabrication de bandages pneumatiques, et en particulier être destinés à former la bande de roulement de tels bandages.

Afin que les bandages pneumatiques satisfassent aux exigences requises en matière de tenue de route et de faible résistance au roulement, il est connu de réaliser des bandes de roulement qui combinent plusieurs éléments fonctionnels, à savoir tout d'abord une sous-couche radialement interne qui est réalisée dans un premier mélange élastomérique et qui est destinée à venir s'appuyer sur l'armature de sommet du bandage, une couche radialement externe qui est formée par un second mélange élastomérique distinct du premier et qui est destinée à former les blocs de sculpture de la bande de roulement, qui viendront au contact de la chaussée lorsque le bandage sera en service sur un véhicule, et enfin des renforts circonférentiels, généralement de section triangulaire, qui sont formés dans un mélange élastomérique possédant un comportement plus rigide que le second mélange constitutif des blocs de sculpture, de sorte que lesdits renforts circonférentiels puissent soutenir latéralement les blocs de sculpture à l'encontre des déformations en dérive, c'est-à-dire à l'encontre des déformations en cisaillement latéral dans un plan contenant l'axe central de rotation du bandage.

Pour produire de tels profilés, la demanderesse a développé des outillages de coextrusion adaptés, tels que décrits notamment dans les demandes WO-2019/002782, WO 2017/146734 A1 ou WO-2019/081362, dans lesquelles on prévoit un chenal de section triangulaire qui permet de former le renfort circonférentiel d'un seul tenant avec la sous-couche et de différer la mise en joint du second mélange élastomérique formant les blocs de sculpture avec ledit renfort, afin de ne pas déstabiliser ou déformer ledit renfort au cours de l'extrusion. Dans la première de ces demandes, à savoir WO-2019/002782, l'outillage permet de former une sous-couche qui s'étend en continu sur une importante largeur du profilé, afin d'être commune à plusieurs blocs de sculpture voisins, tandis que dans la seconde demande WO-2019/081362, la sous-couche est interrompue en largeur à chaque bloc de sculpture, au moyens de racleurs qui réservent des espaces libres dans ladite sous-couche, afin de former plusieurs portions de sous-couches distinctes, avant que le mélange constitutif des blocs de sculpture soit introduit dans lesdits espaces libres, et vienne finalement s'appuyer contre les renforts qui forment les limites des portions de sous-couche bordant latéralement chaque bloc de sculpture concerné.

Or, on souhaite désormais réaliser des bandes de roulement encore plus complexes, telles que celles illustrées dans la demande internationale WO-2018/002487 déposée par la demanderesse, au sein desquelles, d'une part, le renfort circonférentiel doit pouvoir être réalisé dans un troisième mélange élastomérique qui est distinct à la fois du premier mélange élastomérique constitutif de la sous-couche et du second mélange élastomérique constitutif des blocs de sculpture, et au sein desquelles, d'autre part, les formes, les positions d'implantation et les dimensions respectives des renforts, de la sous-couche et des blocs de sculpture doivent pouvoir être décidées très librement, aussi bien dans la direction latérale correspondant à la largeur du profilé que dans la direction verticale correspondant à l'épaisseur du profilé.

Les objets assignés à l'invention visent donc à remédier aux inconvénients susmentionnés et à proposer une nouvelle installation de coextrusion qui, tout en présentant une bonne fiabilité et une relative simplicité de fonctionnement, permette de réaliser un tel profilé de complexité accrue.

Les objets assignés à l'invention sont atteints au moyen d'une installation de coextrusion destinée à générer un profilé en extrudant conjointement une pluralité de mélanges élastomériques selon une direction d'écoulement commune qui correspond à la direction longitudinale dudit profilé, ladite installation comprenant une tête d'extrusion amenant lesdits mélanges élastomériques, ainsi qu'une surface réceptrice, telle qu'un rouleau, qui est placée en vis-à-vis de la tête d'extrusion afin de définir un entrefer servant à conformer la section du profilé, en épaisseur selon une direction dite « direction verticale » qui est perpendiculaire à la direction longitudinale et à la surface réceptrice, et en largeur selon une direction dite « direction latérale » qui est perpendiculaire à la direction longitudinale et à la direction verticale, ladite installation étant caractérisée en ce que la tête d'extrusion comprend, d'amont en aval selon la direction d'écoulement :
- tout d' abord une première portion de tête qui est pourvue d'un ou plusieurs premiers canaux d'admission s'ouvrant dans l'entrefer afin d'amener au contact de la surface réceptrice un premier mélange élastomérique destiné à former une sous-couche du profilé, ladite première portion de tête comprenant également au moins un pré-racleur qui fait saillie verticalement dans l'entrefer en étant délimité, selon la direction latérale, par une première face latérale et une seconde face latérale, et, selon la direction verticale, par une face inférieure qui fait face à la surface réceptrice en étant placée à une première distance prédéterminée, non nulle, de ladite surface réceptrice, dite « épaisseur de pré-raclage », de sorte que ledit pré-racleur puisse réserver, au sein du flux du premier mélange élastomérique, une tranchée dite « tranchée d'enfouissement » qui est bordée d'une part latéralement par un premier sous-flux latéral dudit premier mélange élastomérique et par un second sous-flux latéral dudit premier mélange élastomérique, premier et second sous-flux latéraux qui s'écoulent de part et d'autre du pré-racleur, respectivement le long de la première face latérale et le long de la seconde face latérale dudit pré-racleur, et d'autre part verticalement par un sous-flux de fond qui s'écoule entre la surface réceptrice et la face inférieure du pré-racleur, dans l'épaisseur de pré-raclage, pour former une couche résiduelle de premier mélange élastomérique,
- puis une seconde portion de tête qui est pourvue d'un ou plusieurs seconds canaux d'admission qui s'ouvrent dans l'entrefer pour amener un second mélange élastomérique destiné à recouvrir la sous-couche de premier mélange élastomérique issue de la première portion de tête, ladite seconde portion de tête comprenant au moins un racleur qui s'étend dans le prolongement longitudinal du pré-racleur, et qui fait saillie verticalement dans l'entrefer de sorte à présenter une première face latérale, une seconde face latérale, ainsi qu'une face inférieure qui fait face à la surface réceptrice, à une seconde distance verticale de ladite surface réceptrice dite « épaisseur de raclage » qui est strictement inférieure à l'épaisseur de pré-raclage, de sorte que d'une part ledit racleur puisse préserver latéralement la tranchée d'enfouissement en amenant le flux de second mélange élastomérique à former à un premier sous-flux latéral de second mélange élastomérique et un second sous-flux latéral de second mélange élastomérique, qui s'écoulent respectivement le long de la première face latérale et le long de la seconde face latérale dudit racleur et qui viennent en surépaisseur respectivement du premier et du second sous-flux de premier mélange élastomérique qui sont issus de la première portion de tête, tandis que d'autre part ledit racleur permet de creuser verticalement la tranchée d'enfouissement en réduisant, conformément à l'épaisseur de raclage, l'épaisseur de la couche résiduelle de premier mélange élastomérique au fond de ladite tranchée d'enfouissement,
- puis une troisième portion de tête comprenant au moins un injecteur qui fait saillie dans l'entrefer, dans le prolongement longitudinal du racleur, et qui possède une embouchure d'injection destinée à injecter un troisième mélange élastomérique, distinct du second mélange élastomérique, pour former un insert dans la tranchée d'enfouissement, ladite troisième portion de tête comprenant en outre, à la suite de l'injecteur dans la direction longitudinale, une paroi de couverture qui s'étend sur une longueur prédéterminée dite « longueur de confluence » le long de la direction longitudinale, depuis l'embouchure d'injection jusqu'à la sortie de l'entrefer, afin que l'écoulement du profilé sous ladite paroi de couverture permette aux premier et second sous-flux latéraux de second mélange élastomérique de se refermer sur l'insert en comblant ainsi la tranchée d'enfouissement.

Avantageusement, la tête d'extrusion selon l'invention présente donc un véritable dispositif d'enfouissement, qui permet d'ouvrir une tranchée dans le premier mélange élastomérique constitutif de la sous-couche, au moyen des pré-racleurs, de conserver, grâce aux racleurs, cette tranchée lors de l'arrivée du second mélange élastomérique, lequel second mélange élastomérique est de préférence destiné à constituer des blocs de sculpture de bande de roulement, puis de déposer dans ladite tranchée le troisième mélange élastomérique constitutif de l'insert, ici préférentiellement destiné à former un renfort circonférentiel, avant enfin de laisser le second mélange élastomérique combler ladite tranchée afin d'enrober l'insert.

Un tel dispositif d'enfouissement permet avantageusement de dissocier la gestion des (au moins) trois mélanges élastomériques différents qui sont constitutifs des différents organes fonctionnels du profilé - ici de préférence : la sous-couche, les blocs de sculpture, et les renforts circonférentiels, ce qui offre une grande liberté quant au choix des compositions respectives desdits mélanges élastomériques, et quant à l'implantation des différents organes fonctionnels correspondants, aussi bien selon la direction latérale que selon la direction verticale.

Ainsi, en particulier, l'installation selon l'invention permet, notamment par une configuration adaptée de la troisième portion de tête et de l'injecteur, d'enfouir l'insert à l'intérieur d'un bloc du second mélange élastomérique aussi bien selon la direction latérale, ce qui permet par exemple de positionner l'insert sensiblement au milieu dudit bloc de second mélange élastomérique, que selon la direction verticale, ce qui permet par exemple au second mélange de recouvrir l'insert, afin que ledit insert ne soit pas exposé sur la face apparente du profilé.

Appliqué à la fabrication d'une bande de roulement de bandage pneumatique, le fait d'enfouir ainsi l'insert de renfort circonférentiel en troisième mélange élastomérique au sein du bloc de sculpture réalisé en second mélange élastomérique, de sorte que le sommet radialement le plus externe de l'insert se trouve en retrait radial de la face apparente radialement externe du bloc de sculpture, sous une épaisseur prédéterminée dudit second mélange élastomérique, permet avantageusement de dissocier la fonction porteuse, qui est assurée par le bloc de sculpture qui travaille en compression radiale élastique au contact de la chaussée, sans que l'insert ne vienne au contact de la chaussée ni n'interfère donc avec cette fonction porteuse, de la fonction de résistance à la dérive, qui est assurée par l'insert qui limite le cisaillement axial dudit bloc de sculpture.

De surcroît, l'utilisation en enfilade d'un pré-racleur puis d'un racleur permet de façonner progressivement le premier mélange élastomérique constitutif de la sous-couche, ce qui favorise un fonctionnement régulier et durable de l'installation. En effet, tout d'abord, la présence du pré-racleur dans la première portion de tête permet de limiter l'épaisseur résiduelle de premier mélange élastomérique qui devra ensuite être creusée davantage, voire totalement retirée, par le racleur dans la seconde portion de tête, ce qui évite un engorgement (ou « bourrage ») du premier mélange élastomérique au niveau du racleur. En outre, le fait de conserver néanmoins un entrefer d'épaisseur non nulle entre le pré-racleur et la surface réceptrice, en maintenant une distance de séparation entre le pré-racleur et la surface réceptrice, évite de créer, dans la première portion de tête, un contact précoce et donc une friction précoce entre la tête d'extrusion et la surface réceptrice, c'est-à-dire un contact qui surviendrait en amont du racleur, ce qui permet donc, lorsque ladite surface réceptrice est entraînée en déplacement par rapport à la tête d'extrusion selon la direction longitudinale afin d'accompagner le mouvement du profilé, de limiter l'usure des pré-racleurs et de la surface réceptrice, la quantité d'énergie nécessaire à l'entraînement de ladite surface réceptrice, ainsi que les risques de blocage intempestif de ladite surface réceptrice.

Avantageusement, au sein d'une bande de roulement pour bandage pneumatique, le fait de minimiser l'épaisseur de la sous-couche en premier mélange élastomérique, voire de supprimer ladite sous-couche, aux emplacements prévus pour les inserts de renfort circonférentiels en troisième mélange élastomérique, permet de faire reposer lesdits inserts de renfort directement au contact de l'armature sous-jacente du sommet du pneumatique, et d'éviter par conséquent des phénomènes de dissipation d'énergie par hystérésis dans ladite sous-couche, ce qui contribue à limiter l'échauffement du bandage et à réduire la résistance au roulement dudit bandage, et par conséquent à réduire la consommation de carburant du véhicule.

D'autres objets, caractéristiques et avantages de l'invention apparaîtront plus en détail à la lecture de la description qui suit, ainsi qu'à l'aide des dessins annexés, fournis à titre purement illustratif et non limitatif, parmi lesquels :
La figure 1 illustre, selon une vue en coupe en section droite, normale à la direction longitudinale du profilé, un exemple de profilé obtenu par une installation de coextrusion conforme à l'invention, ledit profilé étant destiné à former une bande de roulement.
La figure 2 illustre, selon une vue en perspective de dessus, une installation de coextrusion permettant de fabriquer le profilé de la figure 1.
La figure 3 illustre la tête d'extrusion de l'installation de la figure 2 selon une vue en perspective de dessous.
La figure 4 illustre, selon une vue de dos en perspective, avec arrachement de matière, le détail de la tête d'extrusion de la figure 3.
La figure 5 illustre, selon une vue de détail en perspective, une lame équipant la troisième portion de la tête d'extrusion des figures 2 à 4 et portant une pluralité d'injecteurs destinés à générer chacun un insert de renfort.
La figure 6 illustre la tête d'extrusion des figures 2 à 5 selon une vue de face.
La figure 7 illustre la tête d'extrusion de la figure 6 selon une vue en coupe de côté.

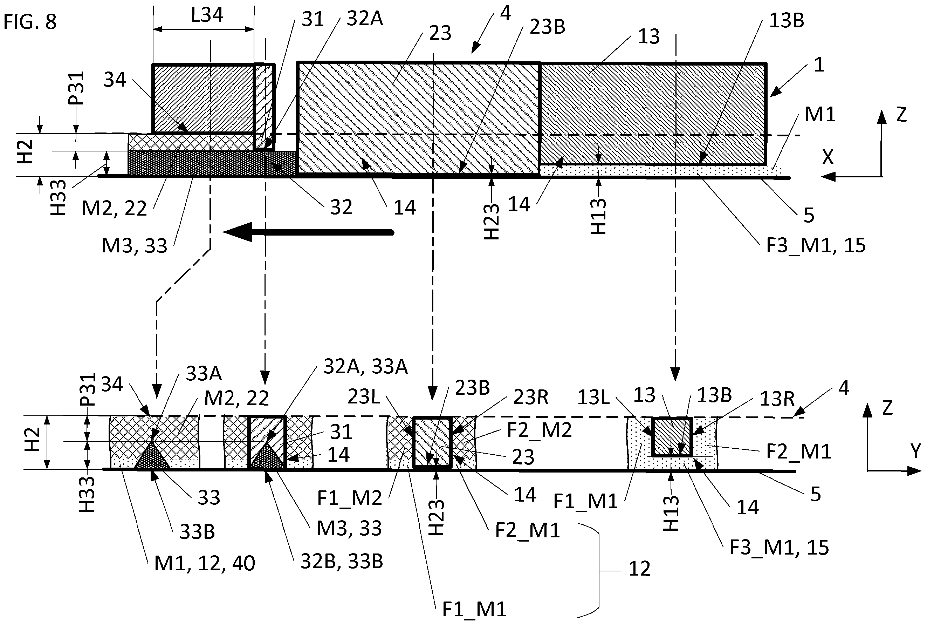

La figure 8 illustre, selon une vue schématique développée en coupe de côté accompagnée de vues schématiques en sections sorties correspondantes, le principe de l'enfouissement de l'insert selon l'invention, selon lequel on crée une tranchée d'enfouissement par pré-raclage puis raclage du premier mélange élastomérique, on injecte ensuite dans ladite tranchée d'enfouissement le troisième mélange élastomérique formant l'insert, puis enfin on recouvre ledit insert en comblant la tranchée d'enfouissement au moyen du second matériau constitutif du bloc de sculpture, de sorte que l'insert se trouve intégré audit bloc de sculpture qu'il étaye.
La figure 9A illustre, selon une vue en section normale à la direction longitudinale d'écoulement, l'admission, au sein de la première portion de la tête d'extrusion des figures 6 et 7, du premier mélange élastomérique destiné à former la sous-couche, et la répartition dudit premier mélange élastomérique entre plusieurs pré-racleurs.
La figure 9B illustre, selon une vue en section normale à la direction longitudinale d'écoulement, à la limite aval de la première portion de tête, la répartition et la conformation de la sous-couche telles que ladite répartition et ladite conformation résultent de l'action de ladite première portion de tête et de ses pré-racleurs.
La figure 9C illustre, selon une vue en section normale à la direction longitudinale d'écoulement, dans la seconde portion de tête, l'action des racleurs qui définissent chacun une tranchée d'enfouissement et répartissent le premier mélange formant la sous-couche et le second mélange destiné à former les blocs de sculpture en sous-flux latéraux qui bordent latéralement la tranchée d'enfouissement considérée.
La figure 9D illustre, selon une vue en section normale à la direction longitudinale d'écoulement, les injecteurs de la troisième portion de tête qui se situent dans la continuité des racleurs et qui introduisent dans chaque tranchée d'enfouissement concernée le troisième mélange élastomérique destiné à former les inserts, et qui conforment ledit troisième mélange élastomérique selon la section voulue pour l'insert, ici une section triangulaire.

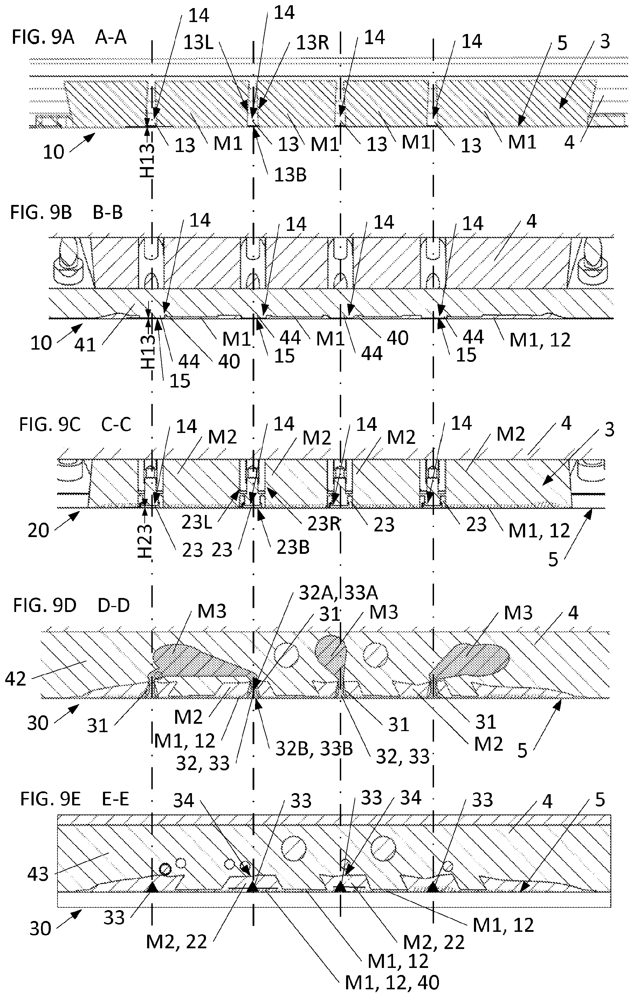

La figure 9E illustre, selon une vue en section normale à la direction longitudinale d'écoulement, dans une partie de la troisième portion de tête qui est située en aval des injecteurs, la reconstitution d'une couche de second mélange élastomérique entre le sommet de chaque insert concerné et la paroi de couverture qui surplombe ledit insert, ladite couche de second mélange élastomérique résultant de la confluence des premier et second flux latéraux de second mélange élastomérique qui se rejoignent au niveau du bord de fuite de chaque injecteur concerné et fusionnent l'un avec l'autre par-dessus l'insert.
La figure 10 illustre, selon une vue partielle, la section d'une variante de profilé selon l'invention incluant un témoin d'usure qui présente, par rapport à la surface réceptrice, une hauteur intermédiaire entre la hauteur, supérieure, du bloc de sculpture et la hauteur, inférieure, de l'insert de renfort.

La présente invention concerne une installation 1 de coextrusion.

Ladite installation 1 est destinée à générer un profilé 2 en extrudant conjointement une pluralité de mélanges élastomériques M1, M2, M3 selon une direction d'écoulement commune qui correspond à la direction longitudinale X dudit profilé 2.

A cet effet, ladite installation 1 comprend une tête d'extrusion 4, qui amène lesdits mélanges élastomériques M1, M2, M3, ainsi qu'une surface réceptrice 5, telle qu'un rouleau 6, qui est placée en vis-à-vis de la tête d'extrusion 4 afin de définir un entrefer 3 servant à conformer la section du profilé 2, en épaisseur H2 selon une direction dite « direction verticale » Z qui est perpendiculaire à la direction longitudinale X et à la surface réceptrice 5, et en largeur W2 selon une direction dite « direction latérale » Y qui est perpendiculaire à la direction longitudinale X et à la direction verticale Z.

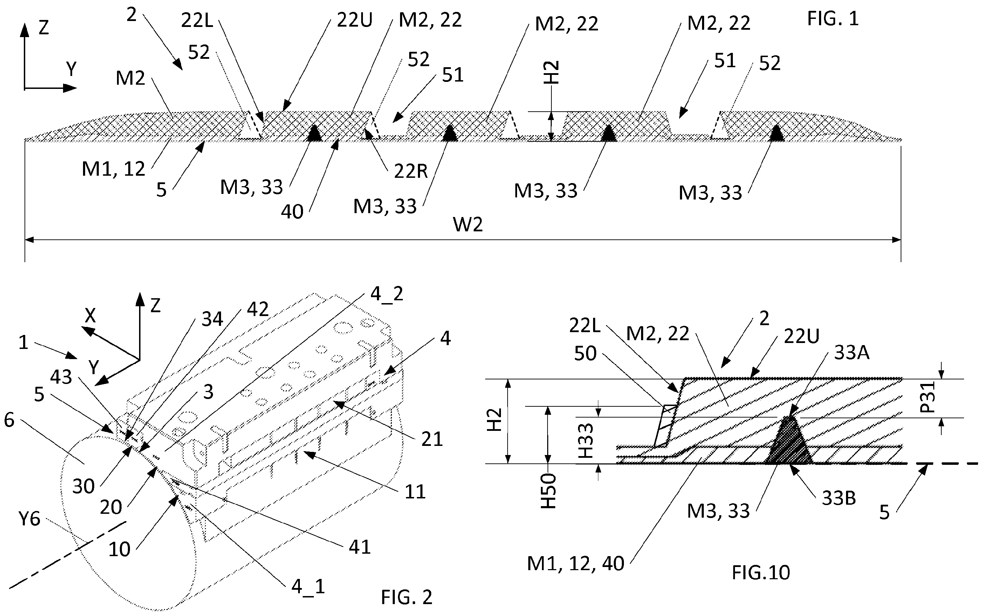

Un exemple de section d'un tel profilé 2 destiné à former une bande de roulement pour un bandage de roue, par exemple pour un bandage pneumatique, ou bien encore pour un bandage non pneumatique au sein duquel la bande de roulement est soutenue par un élément mécanique de type moyeu plein ou réseau de rayons, est illustré sur la figure 1.

La surface réceptrice 5 est avantageusement montée mobile par rapport à la tête d'extrusion 4, de sorte à pouvoir être entraînée en déplacement selon la direction longitudinale X, et ainsi accompagner la progression longitudinale du profilé 2, voire tracter le profilé 2, au fur et à mesure que ledit profilé 2 est généré par coextrusion.

A ce titre, selon une possible variante de mise en œuvre, la surface réceptrice 5 pourrait être formée par une bande convoyeuse entraînée en translation selon la direction longitudinale X par rapport à la tête d'extrusion 4. Selon cette variante, la surface réceptrice 5 pourrait former une surface plane.

Alternativement, selon une autre variante plus préférentielle de mise en œuvre, la surface réceptrice 5 sera formée par un rouleau 6, et plus particulièrement par la surface de révolution radialement externe dudit rouleau 6, ledit rouleau 6 étant entraîné en rotation par rapport à la tête d'extrusion 4, autour de l'axe central Y6 dudit rouleau qui est parallèle à la direction latérale Y, et donc perpendiculaire à la direction longitudinale X, tel que cela est illustré sur la figure 2. Ledit rouleau 6 formera de préférence un cylindre droit, de base circulaire.

Par commodité de description, en référence à un tel rouleau 6, et/ou en référence à l'agencement du bandage fini au sein duquel s'intègre le profilé 2 formant une bande de roulement, on pourra assimiler la direction longitudinale X à la direction « circonférentielle », la direction latérale Y à la direction « axiale », et la direction verticale Z à la direction « radiale ».

Quelle que soit la forme de la surface réceptrice 5, la tête d'extrusion 4 présentera de préférence une forme sensiblement conjuguée, de sorte à venir recouvrir la surface réceptrice 5 sur une zone de chevauchement commune définissant l'entrefer 3. Ainsi, en particulier, lorsque la tête d'extrusion 4 coopère avec un rouleau 6, ladite tête d'extrusion 4 présentera globalement une forme cylindrique conjuguée, en arc de cercle, de préférence centrée sur l'axe central Y6 du rouleau 6.

Le profilé 2 est avantageusement généré en continu dans le sens de sa longueur, selon la direction longitudinale X.

Les notions d'« amont et d'« aval » s'entendront ici en considération du sens global de l'écoulement du profilé 2, qui progresse de l'amont vers l'aval selon la direction longitudinale X.

Selon l'invention, la tête d'extrusion 4 comprend une première portion de tête 10 qui est pourvue d'un ou plusieurs premiers canaux d'admission 11 s'ouvrant dans l'entrefer 3 afin d'amener au contact de la surface réceptrice 5 un premier mélange élastomérique M1 destiné à former une sous-couche 12 du profilé 2.

Dans le cas où le profilé 2 est destiné à former une bande de roulement de bandage de roue, ladite sous-couche 12 est destinée à venir en appui sur et autour de l'armature de sommet du bandage auquel sera intégrée ladite bande de roulement.

De préférence, la sous-couche 12 s'étend, selon la direction latérale Y, sur une largeur cumulée qui représente plus de 80 % de la largeur W2 du profilé 2, préférentiellement plus de 90 % de la largeur W2 du profilé 2. Au sein du profilé 2 sortant de l'installation 1, ladite sous-couche 12 pourra s'étendre en continu sur ladite largeur cumulée, ou, en variante préférentielle, être interrompue ponctuellement aux emplacements recevant des inserts 33, tel que cela sera expliqué plus bas.

De préférence, le premier mélange élastomérique M1 est un mélange à base de caoutchouc non vulcanisé.

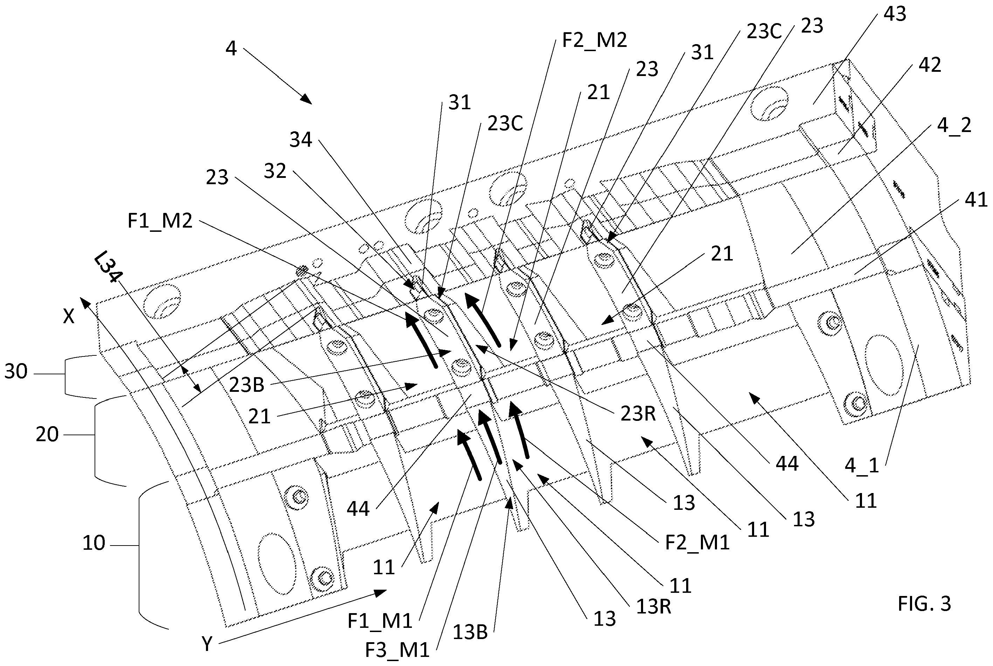

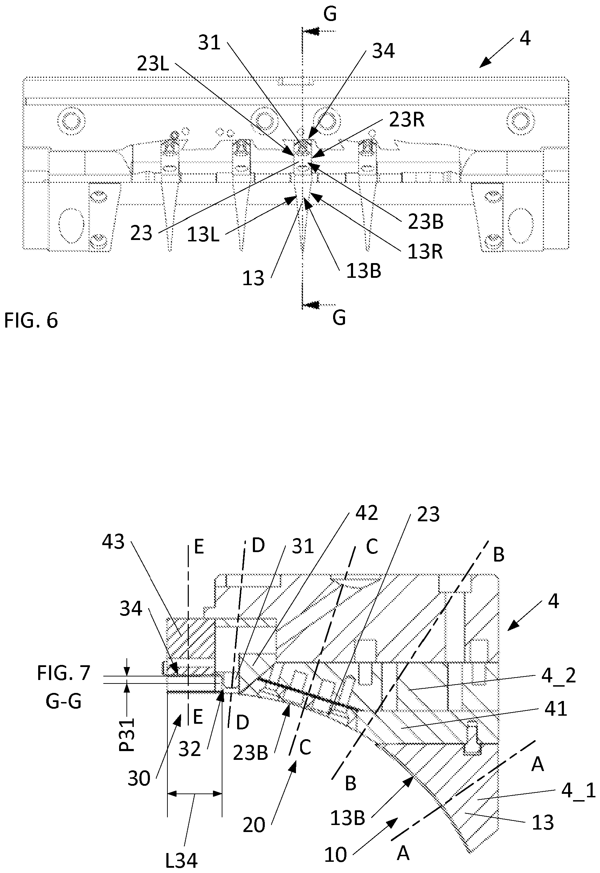

La première portion de tête 10 comprend également, tel que cela est bien visible sur les figures 3, 4, 6, 8 et 9A, au moins un pré-racleur 13 qui fait saillie verticalement dans l'entrefer 3 en étant délimité, selon la direction latérale Y, par une première face latérale 13L et une seconde face latérale 13R, et, selon la direction verticale Z, par une face inférieure 13B qui fait face à la surface réceptrice 5 en étant placée à une première distance H13 prédéterminée, non nulle, de ladite surface réceptrice 5, dite « épaisseur de pré-raclage » H13, de sorte que ledit pré-racleur 13 puisse réserver, au sein du flux du premier mélange élastomérique M1, une tranchée 14 dite « tranchée d'enfouissement » 14.

Tel que cela est visible sur les figures 8 et 9A, ladite tranchée d'enfouissement 14 est bordée d'une part latéralement par un premier sous-flux latéral F1_M1 dudit premier mélange élastomérique et par un second sous-flux latéral F2_M1 dudit premier mélange élastomérique, premier et second sous-flux latéraux qui s'écoulent de part et d'autre du pré-racleur 13, respectivement le premier sous-flux F1_M1 le long de la première face latérale 13L et le second sous-flux F2_M1 le long de la seconde face latérale 13R dudit pré-racleur 13, et d'autre part verticalement par un sous-flux de fond F3_M1 qui s'écoule entre la surface réceptrice 5 et la face inférieure 13B du pré-racleur 13, dans l'épaisseur de pré-raclage H13, pour former une couche résiduelle 15 de premier mélange élastomérique M1.

Ainsi, le pré-racleur 13 agit tel un séparateur qui fractionne le flux de premier mélange élastomérique M1 en plusieurs sous-flux F1_M1, F2_M1, F3_M1 qui contournent ledit pré-racleur 13 tandis que ce dernier occupe le volume de la tranchée d'enfouissement 14 souhaitée.

A titre indicatif, la distance de pré-raclage H13 sera inférieure ou égale à 0,8 mm, et par exemple comprise entre 0,6 mm et 2 mm.

A la suite de la première portion de tête 10 dans la direction d'écoulement, la tête d'extrusion 4 comprend une seconde portion de tête 20 qui est pourvue d'un ou plusieurs seconds canaux d'admission 21 qui s'ouvrent dans l'entrefer 3 pour amener un second mélange élastomérique M2 destiné, tel que cela est visible sur les figures 1, 8 et 9C, à recouvrir la sous-couche 12 de premier mélange élastomérique M1 issue de la première portion de tête 10.

De préférence, le second mélange élastomérique M2 est un mélange à base de caoutchouc non vulcanisé.

Au sein d'un profilé 2 destiné à former une bande de roulement, comme celui illustré sur la figure 1, ledit second mélange élastomérique M2 sera destiné à former des blocs de sculpture 22, qui viendront au contact de la chaussée.

La seconde portion de tête 20 comprend au moins un racleur 23 qui s'étend dans le prolongement longitudinal du pré-racleur 13, et qui fait saillie verticalement dans l'entrefer 3 de sorte à présenter une première face latérale 23L, une seconde face latérale 23R, ainsi qu'une face inférieure 23B qui fait face à la surface réceptrice 5, à une seconde distance verticale H23 de ladite surface réceptrice, dite « épaisseur de raclage » H23, épaisseur de raclage H23 qui est strictement inférieure à l'épaisseur de pré-raclage H13. On a donc : H23 < H13.

De la sorte, d'une part ledit racleur 23 peut préserver latéralement la tranchée d'enfouissement 14 en amenant le flux de second mélange élastomérique M2 à former à un premier sous-flux latéral de second mélange élastomérique F1_M2 et un second sous-flux latéral de second mélange élastomérique F2_M2, qui s'écoulent respectivement le long de la première face latérale 23L du racleur 23 pour le premier sous-flux F1_M2 et le long de la seconde face latérale 23R dudit racleur 23 pour le second sous-flux F2_M2, et qui viennent en surépaisseur respectivement du premier sous-flux latéral de premier mélange élastomérique F1_M1 et du second sous-flux latéral de premier mélange élastomérique F2_M1 qui sont issus de la première portion de tête 10, tandis que d'autre part ledit racleur 23 permet de creuser verticalement la tranchée d'enfouissement 14 en réduisant, conformément à l'épaisseur de raclage H23, l'épaisseur de la couche résiduelle 15 de premier mélange élastomérique M1 au fond de ladite tranchée d'enfouissement 14.

Ainsi, le racleur 23 permet de maintenir ouverte la tranchée d'enfouissement 14 qui a été amorcée précédemment par le pré-racleur 13, en maintenant, tout au long de la seconde portion de tête 20 selon la direction d'écoulement X, un écart latéral d'une part entre le premier sous-flux latéral de premier mélange élastomérique F1_M1 et le second sous-flux latéral de premier mélange élastomérique F2_M1 initialement séparés par le pré-racleur 13, et d'autre part un écart latéral similaire entre le premier sous-flux latéral de second mélange élastomérique F1_M2 et le second sous-flux latéral de premier mélange élastomérique F2_M2 qui, dans la seconde portion de tête 20, viennent se superposer aux sous-flux latéraux de premier mélange élastomérique F1_M1, F2_M1 pour former une surcouche recouvrant au moins en partie la sous-couche 12.

Dans le même temps, le racleur 23 creuse davantage la tranchée d'enfouissement en profondeur 14.

A ce titre, on notera que, de façon préférentielle, la distance de raclage H23 est choisie nulle, de sorte que, dans la seconde portion de tête 20, le racleur 23, et plus particulièrement la face inférieure 23B dudit racleur 23, vient frotter contre la surface réceptrice 5, de manière à éliminer la couche résiduelle de premier mélange élastomérique M1 au fond de la tranchée d'enfouissement 14.

Avantageusement, la progressivité du raclage assuré successivement par un pré-racleur 13 puis par un racleur 23 permet une répartition et une conformation douce de la sous-couche 12 de premier mélange élastomérique M1, sans friction excessive, ce qui limite la consommation d'énergie nécessaire à l'entraînement de la surface réceptrice 5 et évite tout phénomène de broutage ou de blocage de ladite surface réceptrice 5, et plus particulièrement du rouleau 6, et tout phénomène de bourrage du premier mélange élastomérique M1 dans l'entrefer 3, ou encore tout phénomène d'usure prématurée du pré-racleur 13, du racleur 23 ou de la surface réceptrice 5.

Le racleur 23 pourra de préférence présenter un patin de friction destiné à venir au contact glissant contre la surface réceptrice 5, ledit patin de friction étant réalisé dans un matériau qui présente un faible coefficient de frottement vis-à-vis du matériau constitutif de la surface réceptrice 5. A titre d'exemple, ledit patin de friction pourra être réalisé dans un polymère du genre PTFE (PolyTetraFluorEthylène), POM (PolyOxyMéthylène) ou PEEK (PolyEtherEtherCétone), ou encore dans un alliage métallique à base de cuivre.

A la suite de la seconde portion de tête 20 dans la direction d'écoulement, la tête d'extrusion 4 comporte une troisième portion de tête 30 comprenant au moins un injecteur 31 qui fait saillie dans l'entrefer 3, dans le prolongement longitudinal du racleur 23, et qui possède une embouchure d'injection 32 destinée à injecter un troisième mélange élastomérique M3, distinct du second mélange élastomérique M2, pour former un insert 33 dans la tranchée d'enfouissement 14.

Lorsque le profilé 2 est destiné à former une bande de roulement, ledit insert 33 constitue de préférence un renfort circonférentiel, dit « coin », qui permet d'étayer le bloc de sculpture 22 à l'encontre des déformations en cisaillement latéral, afin d'améliorer le comportement en dérive du bandage.

De préférence, le troisième mélange élastomérique M3 est un mélange à base de caoutchouc non vulcanisé.

Avantageusement, l'injecteur 31 se trouvant dans la continuité du racleur 23, ledit injecteur 31 permet de déposer le troisième mélange élastomérique M3 à l'intérieur, et plus particulièrement sur le fond, de la tranchée d'enfouissement 14 dont le volume a été dégagé et façonné successivement par le pré-racleur 13 puis par le racleur 23 qui précèdent ledit injecteur 31.

En d'autres termes, le creusement et la mise en forme progressifs de la tranchée d'enfouissement 14 assurés par le pré-racleur 13 puis le racleur 23 permettent de préparer de façon précise, reproductible et propre l'emplacement destiné à l'implantation de l'insert 33.

De préférence, l'embouchure d'injection 32, et par conséquent la section résultante de l'insert 33, présente une forme triangulaire dont la base 32B, 33B est orientée vers la surface réceptrice 5, et de préférence repose sur ladite surface réceptrice 5, et dont le sommet 32A, 33A est orienté vers la tête d'extrusion 4.

Une telle section triangulaire procure en effet un appui particulièrement rigide et stable à l'insert 33, qui évite le basculement dudit insert 33 selon la direction latérale Y et qui permet donc audit insert 33 de soutenir solidement le bloc de sculpture 22 à l'encontre des efforts de cisaillement en dérive latérale, tout en permettant audit insert 33 de bien supporter, sans subir de déformation trop importante, les contraintes de compression qu'exerce la chaussée, par l'intermédiaire du bloc de sculpture 22, selon la direction verticale Z.

On notera par ailleurs que, lorsque le racleur 23 vient frotter au contact de la surface réceptrice 5 et interrompt donc localement la sous-couche 12 selon la direction latérale Y, à l'emplacement de la tranchée d'enfouissement 14, en éliminant la couche résiduelle de premier mélange élastomérique M1 au fond de la tranchée d'enfouissement 14 comme il a été dit plus haut, alors ceci permet avantageusement à l'injecteur 31 de la troisième portion de tête 30 de poser l'insert 33 en troisième mélange élastomérique M3 au contact de la surface réceptrice 5.

Un tel agencement préférentiel procure avantageusement une bonne assise, stable et rigide, à l'insert 33, qui peut ainsi notamment, dans le cas où le profilé 2 constitue une bande de roulement, reposer directement sur l'armature de sommet du bandage, sous-jacente à ladite bande de roulement.

On notera que si le racleur 23 ne frotte pas contre la surface réceptrice 5 et laisse subsister une fine pellicule de premier mélange élastomérique M1 sous l'insert 33, ceci peut permettre à la sous-couche 12 de préserver sa continuité, et le cas échéant de préserver sa continuité sur toute la largeur cumulée que ladite sous-couche 12 occupe, selon la direction latérale Y, au sein du profilé. A l'inverse, si le racleur 23 frotte contre la surface réceptrice 5, comme cela est préféré pour assurer une meilleure assise de l'insert 33, alors la sous-couche 12 sera interrompue localement, à l'emplacement de chaque insert 33 concerné. De préférence, la sous-couche 12 s'étendra alors néanmoins en continu, selon la direction latérale, en-dehors desdits emplacements où ladite sous-couche 12 s'interrompt pour loger un insert 33.

Par ailleurs, la troisième portion de tête 30 comprend en outre, à la suite de l'injecteur 31 dans la direction longitudinale X, une paroi de couverture 34 qui s'étend sur une longueur L34 prédéterminée dite « longueur de confluence » L34 le long de la direction longitudinale X, depuis l'embouchure d'injection 32 jusqu'à la sortie de l'entrefer 3, afin que l'écoulement du profilé 2 sous ladite paroi de couverture 34 permette au premier sous-flux latéral de second mélange élastomérique F1_M2 et au second sous-flux latéral de second mélange élastomérique F2_M2 de se refermer sur l'insert 33 en comblant ainsi la tranchée d'enfouissement 14.

Ainsi, du fait que l'on rebouche la tranchée d'enfouissement 14 au moyen du second mélange élastomérique M2, l'insert 33 se retrouve parfaitement intégré au sein du bloc de sculpture 22 formé par ledit second mélange élastomérique M2, dans une position qui peut être librement choisie, le long de la direction latérale Y, en déterminant l'emplacement approprié de l'injecteur 31 dans ladite direction latérale Y.

A titre indicatif, la distance la plus courte qui sépare, selon la direction latérale Y, l'insert 33 intégré à un bloc de sculpture 22 du bord latéral 22L, 22R dudit bloc de sculpture 22 qui est le plus proche dudit insert 33, pourra être comprise entre 3 mm et 12 mm, et/ou égale ou supérieure à 20 %, voire à 30% de la largeur hors-tout dudit bloc de sculpture 22.

Avantageusement, l'enfouissement de l'insert 33 sensiblement à mi-largeur du bloc de sculpture 22 permet à un même insert 33 de soutenir latéralement ledit bloc de sculpture 22 efficacement dans les deux sens, en limitant le cisaillement et le basculement du bloc de sculpture 22 aussi bien vers la gauche que vers la droite, ce qui confère audit bloc de sculpture 22 un meilleur comportement en dérive. Lorsque le bloc de sculpture 22 s'étend, selon la direction latérale Y, depuis un premier bord latéral 22L jusqu'à un second bord latéral 22R, la base 33B de l'insert 33 pourra ainsi de préférence se situer à distance, non nulle, et de préférence sensiblement à la même distance non nulle, de chacun desdits bords latéraux 22L, 22R, tel que cela est notamment visible sur la figure 1.

Dans l'absolu, l'invention pourrait trouver à s'appliquer à la réalisation d'un profilé 2 au sein duquel le sommet 33A de l'insert 33 affleure la surface supérieure 22U du bloc de sculpture 22 formé par le second mélange élastomérique M2. A cet effet, il suffirait de faire coïncider la hauteur de la paroi de couverture 34, considérée par rapport à la surface réceptrice 5 selon la direction verticale Z, avec le sommet 32A de l'embouchure d'injection 32, et donc avec le sommet 33A de l'insert 33, de sorte que le premier sous-flux latéral de second mélange élastomérique F1_M2 viendrait en joint avec l'une des parois latérales de l'insert 33 tandis que le second sous-flux latéral de second mélange élastomérique F2_M2 viendrait en joint avec la paroi latérale opposée dudit insert 33, et que le sommet 33A de l'insert marquerait la frontière entre le premier sous-flux latéral de second mélange élastomérique F1_M2 et le second sous-flux latéral de second mélange élastomérique F2_M2.

Toutefois, de façon particulièrement préférentielle, et tel que cela est illustré sur les figures 1, 5, 7, 8, 9D et 9E, l'injecteur 31 est agencé de manière à positionner le point 32A de l'embouchure d'injection 32, dit « sommet 32A de l'embouchure d'injection », qui est le plus éloigné de la surface réceptrice 5, selon la direction verticale Z, et qui correspond ainsi au sommet 33A de l'insert 33, à une distance verticale P31 non nulle de la paroi de couverture 34, dite « profondeur d'enfouissement » P31, de sorte que le premier flux latéral de second mélange élastomérique F1_M2 et le second flux latéral de second mélange élastomérique F2_M2 puissent se rejoindre et fusionner dans l'espace qui est verticalement compris entre le sommet de l'insert 33A et la paroi de couverture 34, afin d'enfouir ledit insert 33 dans le second mélange élastomérique M2, à ladite profondeur d'enfouissement P31 prédéterminée.

Ainsi, lors du comblement de la tranchée d'enfouissement 14, on opérera préférentiellement une jonction des premier et second sous-flux latéraux de second mélange élastomérique F1_M2, F2_M2 l'un avec l'autre, par-dessus le sommet 33A de l'insert, de sorte que cette confluence des premier et second sous-flux latéraux de second mélange élastomérique F1_M2, F2_M2 aura pour effet non seulement de mettre le second mélange élastomérique M2 en joint avec les parois latérales de l'insert 33 mais aussi et surtout, plus globalement, de recouvrir l'insert 33 sous une couche de second mélange élastomérique M2 dont l'épaisseur, non nulle, correspond à la profondeur d'enfouissement P31.

Selon un tel agencement, la distance qui sépare verticalement le sommet 33A de l'insert de la surface réceptrice 5 est donc strictement inférieure, ici d'une valeur égale à la profondeur d'enfouissement P31, à la distance, correspondant ici à l'épaisseur H2 hors-tout du profilé 2, qui sépare verticalement la face supérieure 22U du bloc de sculpture 22 de ladite surface réceptrice 5 à l'aplomb dudit sommet 33A de l'insert.

Avantageusement, en enfouissant l'insert 33 en retrait vertical de la face supérieure 22U apparente, radialement externe, du bloc de sculpture 22, à une profondeur d'enfouissement P31 non nulle prédéterminée qui en pratique sépare le sommet 33A de l'insert de la chaussée, on évite que l'insert 33 n'entre directement au contact de la chaussée et n'interfère ainsi avec la fonction dévolue au bloc de sculpture 22.

Avantageusement, on peut choisir librement la profondeur d'enfouissement P31, et donc le positionnement vertical de l'insert 33 au sein du bloc de sculpture 22, en adaptant les dimensions de l'injecteur 31, et plus globalement en adaptant les dimensions de la troisième portion de tête 30, de sorte à positionner le sommet 32A de l'embouchure d'injection 32 en saillie verticale de la paroi de couverture 34, d'une valeur correspondante à la profondeur d'enfouissement P31 souhaitée, de sorte que le sommet 32A de l'embouchure d'injection 32 se retrouve à une distance de la surface réceptrice 5 qui est inférieure, selon la direction verticale Z, à la distance qui sépare ladite surface réceptrice 5 de la paroi de couverture 34.

A titre indicatif, la profondeur d'enfouissement P31 sera de préférence comprise entre 3 mm et 8 mm, plus préférentiellement comprise entre 5 mm et 7 mm.

A titre indicatif, et notamment lorsque le profilé 2 est destiné à former une bande de roulement pour un bandage destiné à un véhicule de tourisme dont les dimensions correspondent à des jantes de 15 pouces à 20 pouces, l'épaisseur H2 dudit profilé sera de préférence comprise entre 6 mm et 12 mm.

De même, la largeur W2 du profilé 2 sera de préférence comprise entre 150 mm et 350 mm.

De préférence, la hauteur H33 du sommet de l'insert 33A par rapport à la surface réceptrice 5 représente entre 30 % et 60 %, voire entre 40 % et 50 %, de la hauteur de la face supérieure 22U du bloc de sculpture 22 correspondant, et plus globalement de l'épaisseur H2 hors-tout du profilé 2.

De préférence, l'embouchure d'injection 32 se situe sur la face aval de l'injecteur 31, c'est-à-dire sur le bord de fuite dudit injecteur 31, qui marque le point de confluence à partir duquel se rejoignent les sous-flux latéraux de second mélange élastomérique F1_M2, F2_M2 et le flux de troisième mélange élastomérique M3 formant l'insert 33.

De préférence, la base 32B de l'embouchure d'injection 32 se situe en léger retrait de la surface réceptrice 5 selon la direction verticale Z, par exemple à une distance comprise entre 0,5 mm et 0,8 mm de ladite surface réceptrice 5, afin d'éviter que l'injecteur 31 ne frotte contre la surface réceptrice 5. La base 32B de l'embouchure d'injection 32 sera alors de préférence totalement ouverte, de sorte que le troisième mélange élastomérique M3 qui en émerge puisse venir se poser directement contre le fond de la tranchée d'enfouissement 14, et plus particulièrement directement au contact de la surface réceptrice 5.

En ce qui concerne la paroi de couverture 34, et plus particulièrement la longueur de confluence L34 que ladite paroi de couverture définit, selon la direction longitudinale X, entre l'embouchure d'injection 32 et la sortie de l'entrefer 3 où la tête d'extrusion 4, et plus précisément où la paroi de couverture 34, se termine ou à tout le moins s'écarte suffisamment de la surface réceptrice 5 pour libérer le profilé 2 et relâcher la contrainte de compression que ladite paroi de couverture 34 exerçait sur ledit profilé selon la direction verticale Z, les inventeurs ont constaté qu'il convenait que ladite longueur de confluence L34 soit d'une part suffisamment longue pour que les premier et second sous-flux latéraux de second mélange élastomérique F1_M2, F2_M2 opèrent une jonction satisfaisante avec l'insert 33, et plus particulièrement, lorsque lesdits sous-flux latéraux de second mélange élastomérique viennent en joint l'un avec l'autre par-dessus l'insert 33, pour que lesdits sous-flux latéraux de second mélange élastomérique F1_M2, F2_M2 adhèrent parfaitement l'un à l'autre sans laisser subsister de zone de fragilité ou même de fissure (crique) au niveau de leur plan de joint, à l'aplomb du sommet 33A de l'insert, et d'autre part suffisamment courte néanmoins pour éviter que le second mélange élastomérique M2, et plus particulièrement la couche de second mélange élastomérique M2 qui se reconstitue au-dessus de l'insert 33, ne provoque un tassement vertical, et donc une déformation indésirable, dudit insert 33, notamment un écrasement trop marqué de la pointe du sommet 33A dudit insert 33.

C'est pourquoi, de préférence, la longueur de confluence L34 couverte par la paroi de couverture 34 est comprise entre 10 mm et 14 mm.

Cette plage de valeurs est en particulier applicable pour un profilé 2 dont l'épaisseur H2 hors-tout est comprise entre 6 mm et 12 mm comme indiqué plus haut, et dont la hauteur H33 du sommet 33A de l'insert 33, considérée par rapport à la surface réceptrice 5, est égale ou de préférence strictement inférieure à ladite épaisseur H2, par exemple inférieure ou égale à 60 %, ou inférieure à 50 %, de l'épaisseur H2. A titre d'exemple, on pourra notamment appliquer l'invention à un profilé dont l'épaisseur H2 est comprise entre 10 mm et 12 mm et dont le ou les inserts 33 présenteront une hauteur H33 comprise entre 5 mm et 7 mm.

Les inventeurs ont également constaté qu'il semblerait que plus la hauteur H33 de l'insert 33 est grande, et donc plus l'épaisseur de la couche de second mélange élastomérique M2 qui recouvre le sommet de l'insert 33A est fine, c'est-à-dire plus la profondeur d'enfouissement P31 (bien que non nulle) est faible, plus il est nécessaire de prévoir une longueur de confluence L34 élevée (donc qui, ici, tend vers, voire vaut, 14 mm), tandis que lorsque la hauteur H33 de l'insert 33 est plus faible, et donc lorsque la profondeur d'enfouissement P31 est plus importante, il est possible de réduire la longueur de confluence L34 (ici de la faire tendre vers, voire égaler, 10 mm).

Une fois la longueur de confluence L34 parcourue sous la paroi de couverture 34, le profilé 2 sort de l'entrefer 3, et se trouve ainsi libéré à pression atmosphérique ambiante. Le profilé 2 peut alors refroidir et se stabiliser dimensionnellement sur la suite de la surface réceptrice 5, puis sur un convoyeur (non représenté), tel qu'un convoyeur à rouleaux ou à bande, qui prend ledit profilé en charge à la suite de la surface réceptrice 5.

On notera par ailleurs que, par commodité de description et pour éviter toute confusion, on se réfère préférentiellement à un pré-racleur 13, à un racleur 23, à une tranchée d'enfouissement 14, à un injecteur 31 et à un insert 33 correspondants. Ceci étant, bien entendu, on pourra de préférence prévoir, tel que cela est illustré sur les différentes figures, plusieurs ensembles associant chacun en série un pré-racleur 13 et un racleur 23, lesdits ensembles étant répartis à distance les uns des autres sur la largeur de l'entrefer 3 de sorte à creuser autant de tranchées d'enfouissement 14 réparties sur la largeur W2 du profilé et qui permettront d'implanter autant d'inserts 33 au moyen d'autant d'injecteurs 31 au sein d'une pluralité de blocs de sculpture 22. Les caractéristiques des différents éléments de même nature se déduiront de préférence à l'identique de ce qui a été décrit plus haut.

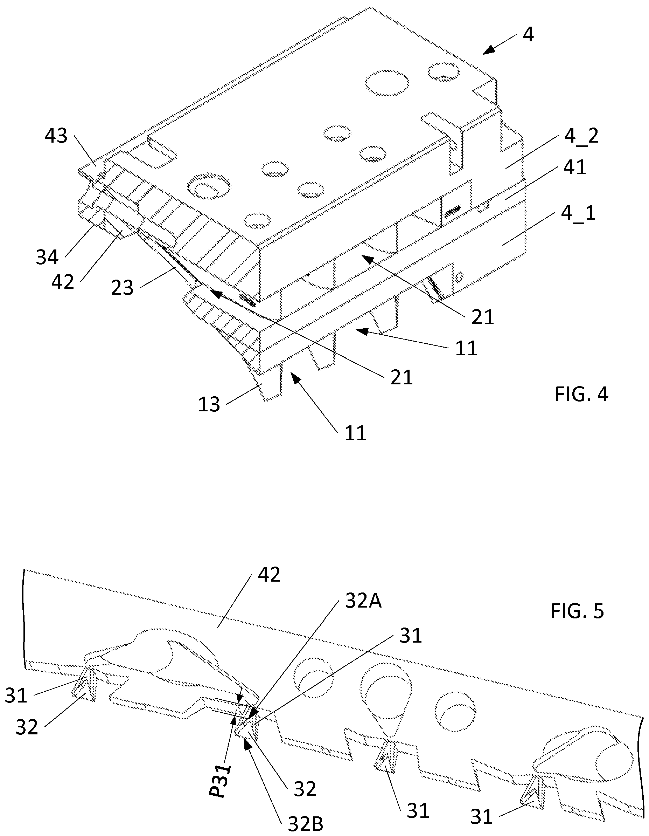

Par commodité de construction, la tête d'extrusion 4 présentera de préférence une structure modulaire, et comprendra par exemple de préférence :
- un premier module 4_1 formant la première portion de tête 10,
- un second module 4_2 formant la seconde portion de tête 20,
- une première lame 41 dite « lame de transition » 41 qui est interposée entre le premier module 4_1 et le second module 4_2 pour assurer une transition entre la première portion 10 et la seconde portion 20, et plus particulièrement pour assurer, avant que le flux de premier mélange élastomérique M1 ne pénètre dans la seconde portion 20 de la tête d'extrusion, une pré-conformation de la sous-couche 12 en premier mélange élastomérique M1,
- une seconde lame 42, qui forme la partie amont de la troisième portion 30 de la tête d'extrusion 4, et qui porte le ou les injecteurs 31, tel que cela est visible sur les figures 5 et 9D,
- et une troisième lame 43, accolée à la seconde lame 42, et qui forme la partie aval de la troisième portion de tête 30 et comprend à cet effet la paroi de couverture 34 qui surplombe l'insert 33, tel que cela est visible sur les figures 3, 7 et 9E.

Lesdits modules 4_1, 4_2 et lames 41, 42, 43 seront assemblés et fixés les uns aux autres, de préférence par vissage, et de façon contiguë les uns aux autres afin d'assurer la continuité de la tête d'extrusion 4 selon la direction longitudinale X.

On notera que, tel que cela est notamment visible sur la figure 9B, la première lame 41 comprend de préférence des dents 44 qui forment des extensions longitudinales terminales des pré-racleurs 13, et peuvent donc être assimilées fonctionnellement auxdits pré-racleurs 13, dents 44 qui permettent d'une part de forcer le sous-flux de fond F3_M1, qui forme la sous-couche résiduelle 15 constitutive du fond de la tranchée d'enfouissement 14, à conserver sensiblement la valeur d'épaisseur de pré-raclage H13 qui lui a été conférée par le pré-racleur 13 qui précède la dent 44 considérée, et d'autre part de répartir et d'affiner les premier et second sous-flux latéraux de premier mélange élastomérique F1_M1, F2_M1 de chaque côté de ladite tranchée d'enfouissement 14 de manière à définir un fond de sous-couche 40 qui est destiné à recevoir le second mélange élastomérique M2 et ainsi à offrir une base de fixation aux blocs de sculpture 22.

De préférence, dans la première portion de tête 10, la largeur du pré-racleur 13, considérée selon la direction latérale Y, va en augmentant dans le sens amont-aval de la direction l'écoulement, tel que cela est bien visible sur la figure 3.

Ainsi, le pré-racleur 13 forme globalement une étrave divergente vis-à-vis du sens écoulement, ce qui permet de répartir progressivement le premier mélange élastomérique M1 en le premier sous-flux latéral F1_M1 et le second sous-flux latéral F2_M1.

Avantageusement, l'espace libre qui sépare deux pré-racleurs 13 voisins selon la direction latérale Y forme ainsi un entonnoir qui fait converger le premier mélange élastomérique M1 vers la dent 44 correspondante de la première lame 41, afin de favoriser une conformation douce du fond de sous-couche 40 qui sera ensuite amené à supporter les blocs de sculpture 22 en second mélange élastomérique M2.

De préférence, dans la seconde portion de tête 20, le racleur 23 présente une portion convergente 23C qui vient se raccorder à l'injecteur 31 et dont la largeur, considérée selon la direction latérale Y, va en rétrécissant dans le sens amont-aval de la direction d'écoulement.

Ainsi, la section du racleur 23, et donc de la tranchée d'enfouissement 14, rétrécit progressivement pour se rapprocher peu à peu d'une largeur égale à, ou proche de, la largeur de la base 33B de l'insert 33. Ceci permet notamment aux premier et second sous-flux latéraux de second mélange élastomère F1_M2, F2_M2 d'opérer, dans la troisième portion de tête 30, une jonction douce et laminaire avec le flux de troisième mélange élastomère M3 formant l'insert 33, sans que lesdits premier et second sous-flux latéraux F1_M2, F2_M2 n'aient à opérer un brusque décrochement latéral qui pourrait perturber le bon écoulement des flux ou déranger la conformation de l'insert 33.

A titre indicatif, la largeur maximale du racleur 23, et donc de la tranchée d'enfouissement 14, dans la seconde portion de tête 20, en limite amont de la portion convergente 23C du racleur 23, pourra être choisie entre deux fois et trois fois la largeur de la base 33B de l'insert 33 voulu, par exemple égale à 2,6 fois la largeur de la base 33B. De telles proportions permettent en effet d'optimiser l'efficacité du raclage.

De même, du point de vue matériel du dimensionnement de l'outillage, la largeur maximale du racleur 23 pourra être sensiblement comprise entre deux fois et trois fois la largeur de la base 32B de l'embouchure d'injection 32.

Avantageusement, l'invention permettra d'utiliser un premier, un second et un troisième mélange élastomérique M1, M2, M3 qui présenteront des compositions différentes les uns des autres, et donc des propriétés mécaniques distinctes, et ce même si, de préférence, tous ces mélanges élastomériques M1, M2, M3 seront à base de caoutchouc non vulcanisé.

Plus particulièrement, on pourra utiliser un troisième mélange élastomérique M3, destiné à former les inserts 33 de renfort, qui présente intrinsèquement une raideur supérieure à celle du second mélange élastomérique M2 qui est destiné à former les blocs de sculpture 22, lequel second mélange élastomérique M2 est donc intentionnellement plus mou.

Le paramètre retenu pour caractériser et sélectionner les mélanges élastomériques M1, M2, M3 sera de préférence le module complexe de cisaillement dynamique, noté G*.

Ainsi, on choisira de préférence un troisième matériau élastomérique M3, utilisé pour les inserts 33, dont le module complexe de cisaillement dynamique G*_M3 est strictement supérieur à celui G*_M2 du second mélange élastomérique M2, utilisé ici pour les blocs de sculpture 22. De même, le module complexe de cisaillement dynamique G*_M3 du troisième mélange élastomérique M3 constitutif des inserts 33 sera de préférence strictement supérieur à celui G*_M1 du premier mélange élastomérique M1 utilisé pour la sous-couche 12.

Ledit module complexe de cisaillement dynamique G* est en effet représentatif de la rigidité du mélange élastomérique considéré, et caractérise le comportement du mélange élastomérique considéré lorsque ce dernier est soumis à une contrainte de cisaillement alternée. Ledit module complexe de cisaillement dynamique G* possède, en représentation dans le plan complexe, une partie réelle, dite aussi « partie élastique » et notée G', qui caractérise le comportement élastique du mélange, et une partie imaginaire, dite aussi « partie visqueuse » et notée G'', qui caractérise la dissipation d'énergie liée au comportement visqueux du mélange.

On désigne par « perte dynamique », ou « perte viscoélastique, notée Tgδ, le rapport de la partie visqueuse G" par la partie élastique G', c'est-à-dire la tangente de l'argument δ dudit module complexe de cisaillement dynamique G* : Tgδ = Tan(δ) = Tan(Arg(G*)) = G''/G'.

La perte viscoélastique Tgδ et le module complexe de cisaillement dynamique G* peuvent être déterminés selon la norme ASTM D 5992-96, par une mesure des propriétés dynamiques du mélange élastomérique sur un viscoanalyseur (ici un modèle Metravib VA4000). La mesure des propriétés dynamiques est réalisée sur un échantillon de mélange élastomérique vulcanisé, ici plus particulièrement vulcanisé dans les conditions de cuisson applicables au bandage dans la constitution duquel entre le profilé 2, l'échantillon ayant la forme d'une éprouvette cylindrique ayant une épaisseur égale à 2 mm et une section égale à 78,5 mm². On enregistre la réponse de l'échantillon de mélange élastomérique à une sollicitation sinusoïdale en cisaillement simple alterné, ayant une amplitude crête-crête égale à 0,7 MPa et une fréquence égale à 10 Hz.

On effectue par ailleurs en outre, lors de cette campagne de mesure, un balayage en température à vitesse de montée en température constante de +1.5°C/min. La température de transition vitreuse Tglass de l'échantillon est en effet la température à laquelle la perte dynamique Tgδ atteint un maximum lors du balayage en température.

La valeur de G* mesurée à 23°C, ou le cas échéant à 60°C, est représentative de la rigidité du mélange élastomérique considéré, c'est-à-dire de sa résistance à la déformation, notamment de sa déformation élastique.

On notera que, au-delà des paramètres effectivement retenus pour mesurer le module complexe de cisaillement dynamique G* de chaque mélange élastomérique, c'est, à paramètres de mesure identiques, l'ordre de grandeur et la valeur relative dudit module G* d'un mélange élastomérique à l'autre qui importent pour quantifier la raideur dudit mélange élastomérique par rapport aux autres mélanges élastomériques, et par conséquent le comportement dudit mélange élastomérique au sein du bandage vulcanisé.

A titre indicatif, on pourra choisir les mélanges élastomériques M1, M2, M3 de telle sorte qu'ils présentent, à l'état vulcanisé, des modules complexes de cisaillement dynamique respectivement compris entre 0,5 MPa et 5 MPa pour le premier mélange élastomérique M1, entre 0,9 MPa et 5 MPa pour le second mélange élastomérique M2, et entre 40 MPa et 60 MPa pour le troisième mélange élastomérique M3, lesdits modules complexes de cisaillement dynamique G* étant ici mesurés à 60°C selon la norme rappelée ci-dessus.

L'invention concerne bien entendu en tant que tel un procédé de fabrication d'un profilé 2, et plus particulièrement d'un profilé 2 destiné à former une bande de roulement de bandage pour roue de véhicule.

Ainsi, l'invention porte notamment sur un procédé de fabrication d'un profilé 2 au cours duquel on ouvre, au moyen d'un pré-racleur 13, une tranchée d'enfouissement 14 dans un premier mélange élastomérique M1 constitutif d'une sous-couche 12 du profilé 2, puis l'on amène un second mélange élastomérique M2 pour recouvrir ladite sous-couche 12 tout en conservant, grâce à un racleur 23, la tranchée d'enfouissement 14 au sein des premier et second mélanges élastomériques M1, M2, puis l'on dépose dans ladite tranchée d'enfouissement 14 un troisième mélange élastomérique M3 constitutif d'un insert 33, puis on laisse le second mélange élastomérique M2 combler ladite tranchée d'enfouissement 14 afin d'enrober l'insert 33.

De préférence, tel que cela a été décrit plus haut, le second mélange élastomérique M2 vient, au cours de ce procédé, recouvrir la tranchée d'enfouissement 14 et l'insert 33 de manière à enfouir le sommet dudit insert 33 à une profondeur d'enfouissement P31 non nulle, de préférence comprise entre 3 mm et 8 mm.

De préférence, le procédé est mis en œuvre pour fabriquer un profilé 2 destiné à former une bande de roulement de bandage pour roue de véhicule, profilé 2 au sein duquel le premier mélange élastomérique M1 forme une sous-couche 12 destinée à venir se fixer sur une armature de sommet du bandage, le second mélange élastomérique M2 est destiné à former des blocs de sculpture 22 venant au contact avec la route, et l'insert en troisième mélange élastomérique M3 est destiné à former un renfort circonférentiel au sein de la bande de roulement.

De préférence, le module complexe de cisaillement dynamique G*_M3 du troisième mélange élastomérique M3 est strictement supérieur au module complexe de cisaillement dynamique G*_M2 du second mélange élastomérique M2.

Comme indiqué plus haut, ceci permettra de conférer une plus grande rigidité à l'insert 33 de renfort, et une plus grande souplesse au bloc de sculpture 22.

De préférence, on pourra choisir les mélanges élastomériques M1, M2, M3 de telle sorte qu'ils présentent des modules complexes de cisaillement dynamique dans les plages de valeurs indiquées plus haut.

Bien entendu, le procédé de fabrication de profilé 2 décrit ci-dessus met de préférence en œuvre une installation 1 telle que décrite dans ce qui précède pour fabriquer ledit profilé 2.

Selon une possibilité d'application préférentielle, l'invention porte sur un procédé de fabrication d'un bandage pour roue de véhicule au cours duquel on fabrique un profilé 2 selon le procédé de fabrication de profilé ci-dessus, et l'on utilise ledit profilé 2 pour former la bande de roulement dudit bandage.

Selon une possibilité préférentielle de mise en œuvre dudit procédé de fabrication de bandage pour roue de véhicule, on pourra prévoir de façonner dans au moins l'un des blocs de sculpture 22 formés dans le second mélange élastomérique M2 au moins un témoin d'usure 50 permettant de surveiller l'état d'usure du bandage, et faire en sorte que le sommet 33A de l'insert 33 formé à partir du troisième mélange élastomérique M3 présente une hauteur H33, par rapport à la surface réceptrice 5 et selon la direction verticale Z, ou, plus particulièrement au sein du bandage fini, une distance radiale à l'axe dudit bandage, qui est strictement inférieure à la hauteur H50 (respectivement strictement inférieure à la distance radiale à l'axe) dudit témoin d'usure 50 de sorte que, lorsque le bandage est en service, on parvient au témoin d'usure 50 avant de découvrir le sommet 33A de l'insert enfoui dans l'au moins un des blocs de sculpture 22.

Avantageusement, ceci permettra à l'insert 33 de renfort de remplir pleinement, tout au long de la vie du bandage, sa fonction de maîtrise de la dérive, sans être exposé sur la face apparente de la bande de roulement et donc sans interférer avec la route.

Le témoin d'usure 50 pourra de préférence être obtenu lors du moulage du bandage dans une presse de vulcanisation, à la jonction entre le bord latéral 22L apparent d'un bloc de sculpture 22 et le fond du sillon 51 circonférentiel que borde ledit bloc de sculpture 22, tel que cela est visible sur la figure 10, par conformation dudit bord latéral 22L dans ladite presse de vulcanisation.

Par ailleurs, on pourra éventuellement, après la coextrusion du profilé 2, compléter ledit profilé en accolant latéralement à certains blocs de sculpture 22 des renforts auxiliaires 52, par exemple de section triangulaire, tel que cela est indiqué en pointillés sur la figure 1.

Ainsi, de préférence, au cours du procédé de fabrication de bandage selon l'invention, on pourra réaliser le profilé 2 de telle sorte que ledit profilé 2 comprend au moins un bloc de sculpture 22 qui est délimité selon la direction latérale Y par au moins un bord latéral 22L, 22R et qui comprend un insert 33 enfoui dans ledit bloc de sculpture 22 à distance dudit au moins un bord latéral 22L, 22R, et l'on ajoutera un renfort auxiliaire 52, de préférence de section triangulaire, contre ledit au moins un bord latéral 22L, 22R du bloc de sculpture 22.

De préférence, la hauteur du sommet du renfort auxiliaire 52 sera strictement supérieure à la hauteur H33 du sommet de l'insert 33 enfoui, et plus préférentiellement, le sommet du renfort auxiliaire 52 affleurera la face supérieure 22U du bloc de sculpture 22.

De préférence, la base du renfort auxiliaire 52 reposera directement sur la sous-couche 12 en premier mélange élastomérique M1. Plus préférentiellement, la base du renfort auxiliaire 52 reposera de préférence sur une portion dite « intermédiaire » de la sous-couche 12 en premier mélange élastomérique M1, portion intermédiaire de sous-couche qui assure, selon la direction latérale Y, la continuité de la sous-couche 12 avec les fonds de sous-couche 40 servant d'assises aux blocs de sculpture 22, et en particulier la continuité de la sous-couche 12 sous les sillons 51. On notera par ailleurs que l'épaisseur de la sous-couche 12 peut être inférieure, dans la ou les portions intermédiaires situées sous le ou les renforts auxiliaires 52 et/ou au fond du ou des sillons 51, à l'épaisseur que présente ladite sous-couche 12 dans les fonds de sous-couche 40 qui portent les blocs de sculpture 22.

De préférence, le renfort auxiliaire 52 sera formé dans un mélange élastomérique, préférentiellement à base de caoutchouc cru, qui possède, une fois vulcanisé, un module complexe de cisaillement dynamique G* strictement supérieur à celui G*_M2 du second mélange élastomérique M2 constitutif du bloc de sculpture 22, afin de présenter une plus grande raideur, et ainsi de pouvoir contribuer à soutenir et rigidifier le bloc de sculpture 22 à l'encontre de la dérive latérale.

De même, de préférence, le module complexe de cisaillement dynamique G* du renfort auxiliaire 52 sera strictement supérieur à celui G*_M1 du premier mélange élastomérique M1 constitutif de la sous-couche 12.

Le renfort auxiliaire 52 pourra être rapporté sur le profilé 2 cru, après que ledit profilé 2 a été produit par coextrusion, en intégrant, par exemple par rouletage, ledit renfort auxiliaire 52 dans l'emplacement réservé à cet effet dans le profilé 2, contre le bord latéral 22L, 22R du bloc de sculpture 22 concerné. L'ensemble sera ensuite vulcanisé, lors de la cuisson du bandage.

Avantageusement, la combinaison d'un insert 33 enfoui dans le bloc de sculpture 22 et d'un renfort auxiliaire 52 latéral placé à l'interface entre ledit bloc de sculpture 22 et le sillon circonférentiel 51 permet d'optimiser le comportement en dérive du bloc de sculpture 22 concerné.

Bien entendu, l'invention porte en tant que telle également sur un profilé 2 obtenu comme indiqué plus haut, et sur un bandage, notamment un bandage pneumatique, pourvu d'un tel profilé 2.

En particulier, l'invention pourra porter sur un profilé 2 comprenant un ou des insert 33 enfouis chacun dans un bloc de sculpture 22, sur un profilé 2 dit « profilé amélioré » combinant un ou des inserts 33 enfouis chacun dans un bloc de sculpture 22 avec un ou des renforts auxiliaires 52 tels que décrits plus haut, ainsi que, enfin, sur un bandage pour roue de véhicule comportant une bande de roulement formée par un tel profilé 2 amélioré.

## Revendications

1. Installation (1) de coextrusion destinée à générer un profilé (2) en extrudant conjointement une pluralité de mélanges élastomériques (M1, M2, M3) selon une direction d'écoulement commune qui correspond à la direction longitudinale (X) dudit profilé (2), ladite installation comprenant une tête d'extrusion (4) amenant lesdits mélanges élastomériques (M1, M2, M3), ainsi qu'une surface réceptrice (5), telle qu'un rouleau (6), qui est placée en vis-à-vis de la tête d'extrusion (4) afin de définir un entrefer (3) servant à conformer la section du profilé (2), en épaisseur (H2) selon une direction dite « direction verticale » (Z) qui est perpendiculaire à la direction longitudinale (X) et à la surface réceptrice (5), et en largeur (W2) selon une direction dite « direction latérale » (Y) qui est perpendiculaire à la direction longitudinale (X) et à la direction verticale (Z), ladite installation (1) étant **caractérisée en ce que** la tête d'extrusion (4) comprend, d'amont en aval selon la direction d'écoulement :
- tout d'abord une première portion de tête (10) qui est pourvue d'un ou plusieurs premiers canaux d'admission (11) s'ouvrant dans l'entrefer (3) afin d'amener au contact de la surface réceptrice (5) un premier mélange élastomérique (M1) destiné à former une sous-couche (12) du profilé (2), ladite première portion de tête (10) comprenant également au moins un pré-racleur (13) qui fait saillie verticalement dans l'entrefer (3) en étant délimité, selon la direction latérale (Y), par une première face latérale (13L) et une seconde face latérale (13R), et, selon la direction verticale (Z), par une face inférieure (13B) qui fait face à la surface réceptrice (5) en étant placée à une première distance (H13) prédéterminée, non nulle, de ladite surface réceptrice, dite « épaisseur de pré-raclage » (H13), de sorte que ledit pré-racleur (13) puisse réserver, au sein du flux du premier mélange élastomérique (M1), une tranchée dite « tranchée d'enfouissement » (14) qui est bordée d'une part latéralement par un premier sous-flux latéral (F1_M1) dudit premier mélange élastomérique (M1) et par un second sous-flux latéral (F2_M1) dudit premier mélange élastomérique (M1), premier et second sous-flux latéraux (F1_M1, F2_M1) qui s'écoulent de part et d'autre du pré-racleur (13), respectivement le long de la première face latérale (13L) et le long de la seconde face latérale (13R) dudit pré-racleur, et d'autre part verticalement par un sous-flux de fond (F3_M1) qui s'écoule entre la surface réceptrice (5) et la face inférieure (13B) du pré-racleur (13), dans l'épaisseur de pré-raclage (H13), pour former une couche résiduelle (15) de premier mélange élastomérique (M1),
- puis une seconde portion de tête (20) qui est pourvue d'un ou plusieurs seconds canaux d'admission (21) qui s'ouvrent dans l'entrefer (3) pour amener un second mélange élastomérique (M2) destiné à recouvrir la sous-couche (12) de premier mélange élastomérique (M1) issue de la première portion de tête (10), ladite seconde portion de tête comprenant au moins un racleur (23) qui s'étend dans le prolongement longitudinal du pré-racleur (13), et qui fait saillie verticalement dans l'entrefer (3) de sorte à présenter une première face latérale (23L), une seconde face latérale (23R), ainsi qu'une face inférieure (23B) qui fait face à la surface réceptrice (5), à une seconde distance verticale (H23) de ladite surface réceptrice (5) dite « épaisseur de raclage » (H23) qui est strictement inférieure à l'épaisseur de pré-raclage (H13), de sorte que d'une part ledit racleur (23) puisse préserver latéralement la tranchée d'enfouissement (14) en amenant le flux de second mélange élastomérique (M2) à former à un premier sous-flux latéral de second mélange élastomérique (F1_M2) et un second sous-flux latéral de second mélange élastomérique (F2_M2), qui s'écoulent respectivement le long de la première face latérale (23L) et le long de la seconde face latérale (23R) dudit racleur et qui viennent en surépaisseur respectivement du premier et du second sous-flux latéral de premier mélange élastomérique (F1_M1, F2_M1) qui sont issus de la première portion de tête (10), tandis que d'autre part ledit racleur (23) permet de creuser verticalement la tranchée d'enfouissement (14) en réduisant, conformément à l'épaisseur de raclage (H23), l'épaisseur de la couche résiduelle de premier mélange élastomérique (M1) au fond de ladite tranchée d'enfouissement (14),
- puis une troisième portion de tête (30) comprenant au moins un injecteur (31) qui fait saillie dans l'entrefer (3), dans le prolongement longitudinal du racleur (23), et qui possède une embouchure d'injection (32) destinée à injecter un troisième mélange élastomérique (M3), distinct du second mélange élastomérique (M2), pour former un insert (33) dans la tranchée d'enfouissement (14), ladite troisième portion de tête (30) comprenant en outre, à la suite de l'injecteur (31) dans la direction longitudinale (X), une paroi de couverture (34) qui s'étend sur une longueur prédéterminée dite « longueur de confluence » (L34) le long de la direction longitudinale (X), depuis l'embouchure d'injection (32) jusqu'à la sortie de l'entrefer (3), afin que l'écoulement du profilé (2) sous ladite paroi de couverture (34) permette aux premier et second sous-flux latéraux de second mélange élastomérique (F1_M2, F2_M2) de se refermer sur l'insert (33) en comblant ainsi la tranchée d'enfouissement (14).

2. Installation selon la revendication 1 **caractérisée en ce que** la distance de raclage (H23) est nulle, de sorte que, dans la seconde portion de tête (20), le racleur (23) vient frotter contre la surface réceptrice (5) de manière à éliminer la couche résiduelle de premier mélange élastomérique (M1) au fond de la tranchée d'enfouissement (14), afin de permettre à l'injecteur (31) de la troisième portion de tête (30) de poser l'insert (33) en troisième mélange élastomérique (M3) au contact de la surface réceptrice (5).

3. Installation selon la revendication 1 ou 2 **caractérisée en ce que** l'injecteur (31) est agencé de manière à positionner le point de l'embouchure d'injection (32) qui est le plus éloigné de la surface réceptrice (5), selon la direction verticale (Z), et qui correspond ainsi au sommet de l'insert (33A), à une distance verticale non nulle de la paroi de couverture (34), dite « profondeur d'enfouissement » (P31), de sorte que le premier flux latéral de second mélange élastomérique (F1_M2) et le second flux latéral de second mélange élastomérique (F2_M2) puissent se rejoindre et fusionner dans l'espace qui est verticalement compris entre le sommet de l'insert (33A) et la paroi de couverture (34), afin d'enfouir ledit insert (33) dans le second mélange élastomérique (M2) à ladite profondeur d'enfouissement (P31).

4. Installation selon la revendication 3 **caractérisée en ce que** la profondeur d'enfouissement (P31) est comprise entre 3 mm et 8 mm, de préférence entre 5 mm et 7 mm.

5. Installation selon l'une des revendications précédentes **caractérisée en ce que** la longueur de confluence (L34) couverte par la paroi de couverture (34) est comprise entre 10 mm et 14 mm.

6. Installation selon l'une des revendications précédentes **caractérisée en ce que**, dans la première portion de tête (10), la largeur du pré-racleur (13), considérée selon la direction latérale (Y), va en augmentant dans le sens amont-aval de la direction l'écoulement.

7. Installation selon l'une des revendications précédentes **caractérisée en ce que**, dans la seconde portion de tête (20), le racleur (23) présente une portion convergente (23C) qui vient se raccorder à l'injecteur (31) et dont la largeur, considérée selon la direction latérale (Y), va en rétrécissant dans le sens amont-aval de la direction d'écoulement.

8. Installation selon l'une des revendications précédentes **caractérisée en ce que** l'embouchure d'injection (32), et par conséquent la section résultante de l'insert (33), présente une forme triangulaire dont la base (33B) est orientée vers la surface réceptrice (5) et le sommet (33A) vers la tête d'extrusion (4).

9. Installation selon l'une des revendications précédentes **caractérisée en ce que** la surface réceptrice (5) est formée par une bande convoyeuse entraînée en translation selon la direction longitudinale (X) par rapport à la tête d'extrusion (4) ou, plus préférentiellement, par un rouleau (6) qui est entraîné en rotation par rapport à la tête d'extrusion (4), autour de son axe central (Y6) qui est parallèle à la direction latérale (Y).

10. Procédé de fabrication d'un profilé (2) **caractérisé en ce que** l'on ouvre, au moyen d'un pré-racleur (13), une tranchée d'enfouissement (14) dans un premier mélange élastomérique (M1) constitutif d'une sous-couche (12) du profilé (2), puis l'on amène un second mélange élastomérique (M2) pour recouvrir ladite sous-couche (12) tout en conservant, grâce à un racleur (23), la tranchée d'enfouissement (14) au sein des premier et second mélanges élastomériques (M1, M2), puis l'on dépose dans ladite tranchée d'enfouissement (14) un troisième mélange élastomérique (M3) constitutif d'un insert (33), puis on laisse le second mélange élastomérique (M2) combler ladite tranchée d'enfouissement (14) afin d'enrober l'insert (33).

11. Procédé selon la revendication 10 **caractérisé en ce que** le second mélange élastomérique (M2) vient recouvrir la tranchée d'enfouissement (14) et l'insert (33) de manière à enfouir le sommet dudit insert (33) à une profondeur d'enfouissement (P31) non nulle, de préférence comprise entre 3 mm et 8 mm.

12. Procédé selon la revendication 10 ou 11 **caractérisé en ce que** le profilé (2) est destiné à former une bande de roulement de bandage pour roue de véhicule, **en ce que**, au sein dudit profilé (2), le premier mélange élastomérique (M1) forme une sous-couche (12) destinée à venir se fixer sur une armature de sommet du bandage, le second mélange élastomérique (M2) est destiné à former des blocs de sculpture (22) venant au contact avec la route, et l'insert (33) en troisième mélange élastomérique (M3) est destiné à former un renfort circonférentiel au sein de la bande de roulement, et **en ce que** le module complexe de cisaillement dynamique (G*_M3) du troisième mélange élastomérique (M3) est strictement supérieur au module complexe de cisaillement dynamique (G*_M2) du second mélange élastomérique (M2).

13. . Procédé de fabrication d'un bandage pour roue de véhicule au cours duquel on fabrique selon le procédé de la revendication 12 un profilé (2) et l'on utilise ledit profilé (2) pour former la bande de roulement dudit bandage.

14. Procédé de fabrication d'un bandage pour roue de véhicule selon la revendication 13 **caractérisé en ce que** l'on façonne dans au moins l'un des blocs de sculpture (22) formés dans le second mélange élastomérique (M2) au moins un témoin d'usure (50) permettant de surveiller l'état d'usure du bandage, et **en ce que** le sommet (33A) de l'insert (33) formé à partir du troisième mélange élastomérique (M3) présente une hauteur (H33), par rapport à la surface réceptrice (5) et selon la direction verticale (Z), qui est strictement inférieure à la hauteur (H50) dudit témoin d'usure (50) de sorte que, lorsque le bandage est en service, on parvient au témoin d'usure (50) avant de découvrir le sommet (33A) de l'insert enfoui dans l'au moins un des blocs de sculpture (22).

15. Procédé de fabrication d'un bandage pour roue de véhicule selon la revendication 13 ou 14 **caractérisé en ce que** le profilé (2) réalisé comprend au moins un bloc de sculpture (22) qui est délimité selon la direction latérale (Y) par au moins un bord latéral (22L, 22R) et qui comprend un insert (33) enfoui dans ledit bloc de sculpture (22) à distance dudit au moins un bord latéral (22L, 22R), et **en ce que** l'on ajoute un renfort auxiliaire (52), de préférence de section triangulaire, contre ledit au moins un bord latéral (22L, 22R) du bloc de sculpture (22).

## Patentansprüche

1. Anlage (1) zur Koextrusion, die dazu bestimmt ist, ein Profil (2) zu erzeugen, indem eine Mehrzahl von Elastomermischungen (M1, M2, M3) zusammen entlang einer gemeinsamen Fließrichtung extrudiert werden, die der Längsrichtung (X) des Profils (2) entspricht, wobei die Anlage einen Extrusionskopf (4) umfasst, der die Elastomermischungen (M1, M2, M3) zuführt, sowie eine Aufnahmefläche (5) wie etwa eine Walze (6), die gegenüber dem Extrusionskopf (4) platziert ist, um einen Spalt (3) zu definieren, der dazu dient, den Querschnitt des Profils (2) in der Dicke (H2) entlang einer Richtung, "vertikale Richtung" (Z) genannt, die senkrecht zu der Längsrichtung (X) und zu der Aufnahmefläche (5) ist, und in der Breite (W2) entlang einer Richtung, "seitliche Richtung" (Y) genannt, die senkrecht zu der Längsrichtung (X) und zu der vertikalen Richtung (Z) ist, zu formen, wobei die Anlage (1) **dadurch gekennzeichnet ist, dass** der Extrusionskopf (4) von stromauf nach stromab entlang der Fließrichtung umfasst:
- zunächst einen ersten Kopfabschnitt (10), der mit einem oder mehreren ersten Zuführkanälen (11) versehen ist, die sich in dem Spalt (3) öffnen, um im Kontakt mit der Aufnahmefläche (5) eine erste Elastomermischung (M1) zuzuführen, die dazu bestimmt ist, eine Teilschicht (12) des Profils (2) zu bilden, wobei der erste Kopfabschnitt (10) auch mindestens einen Vorabstreifer (13) umfasst, der vertikal in den Spalt (3) hineinragt, wobei er entlang der seitlichen Richtung (Y) durch eine erste seitliche Fläche (13L) und eine zweite seitliche Fläche (13R) begrenzt wird und entlang der vertikalen Richtung (Z) durch eine untere Fläche (13B), die der Aufnahmefläche (5) zugewandt ist, wobei sie in einem ersten vorbestimmten Abstand (H13) ungleich null von der Aufnahmefläche, "Vorabstreifdicke" (H13) genannt, platziert ist, so dass der Vorabstreifer (13) in dem Strom der ersten Elastomermischung (M1) einen Graben, "Einbindegraben" (14) genannt, aussparen kann, der zum einen seitlich von einem ersten seitlichen Teilstrom (F1_M1) der ersten Elastomermischung (M1) und von einem zweiten seitlichen Teilstrom (F2_M1) der ersten Elastomermischung (M1), erste und zweite seitliche Teilströme (F1_M1, F2_M1), gesäumt wird, die beidseits des Vorabstreifers (13) entlang der ersten seitlichen Fläche (13L) beziehungsweise entlang der zweiten seitlichen Fläche (13R) des Vorabstreifers fließen, und zum anderen vertikal von einem Bodenteilstrom (F3_M1), der zwischen der Aufnahmefläche (5) und der unteren Fläche (13B) des Vorabstreifers (13), in der Vorabstreifdicke (H13), fließt, um eine Restschicht (15) aus erster Elastomermischung (M1) zu bilden,
- dann einen zweiten Kopfabschnitt (20), der mit einem oder mehreren zweiten Zuführkanälen (21) versehen ist, die sich in dem Spalt (3) öffnen, um eine zweite Elastomermischung (M2) zuzuführen, die dazu bestimmt ist, die Teilschicht (12) aus der ersten Elastomermischung (M1), die aus dem ersten Kopfabschnitt (10) hervorgegangen ist, zu bedecken, wobei der zweite Kopfabschnitt mindestens einen Abstreifer (23) umfasst, der sich in der Längsverlängerung des Vorabstreifers (13) erstreckt und der vertikal in den Spalt (3) hineinragt, so dass er eine erste seitliche Fläche (23L), eine zweite seitliche Fläche (23R) sowie eine untere Fläche (23B), die der Aufnahmefläche (5) zugewandt ist, in einem zweiten vertikalen Abstand (H23) von der Aufnahmefläche (5), "Abstreifdicke" (H23) genannt, die strikt kleiner als die Vorabstreifdicke (H13) ist, aufweist, so dass zum einen der Abstreifer (23) den Einbindegraben (14) seitlich bewahren kann, indem er den Strom der zweiten Elastomermischung (M2) so zuführt, dass ein erster seitlicher Teilstrom aus der zweiten Elastomermischung (F1_M2) und ein zweiter seitlicher Teilstrom aus der zweiten Elastomermischung (F2_M2) gebildet werden, die entlang der ersten seitlichen Fläche (23L) beziehungsweise entlang der zweiten seitlichen Fläche (23R) des Abstreifers fließen und die als Überdicke des ersten beziehungsweise des zweiten seitlichen Teilstroms aus der ersten Elastomermischung (F1_M1, F2_M1), die aus dem ersten Kopfabschnitt (10) hervorgegangen sind, angeordnet sind, während zum anderen der Abstreifer (23) es ermöglicht, den Einbindegraben (14) vertikal auszuhöhlen, indem gemäß der Abstreifdicke (H23) die Dicke der Restschicht aus der ersten Elastomermischung (M1) am Boden des Einbindegrabens (14) reduziert wird,
- dann einen dritten Kopfabschnitt (30), der mindestens einen Injektor (31) umfasst, der in den Spalt (3) in der Längsverlängerung des Abstreifers (23) hineinragt und der eine Injektionsmündung (32) besitzt, die dazu bestimmt ist, eine dritte Elastomermischung (M3), die von der zweiten Elastomermischung (M2) verschieden ist, zu injizieren, um eine Einlage (33) in dem Einbindegraben (14) zu bilden, wobei der dritte Kopfabschnitt (30) ferner, nach dem Injektor (31) in der Längsrichtung (X), eine Abdeckwand (34) umfasst, die sich über eine vorbestimmte Länge, "Konfluenzlänge" (L34) genannt, entlang der Längsrichtung (X) von der Injektionsmündung (32) bis zum Auslass des Spalts (3) erstreckt, damit das Fließen des Profils (2) unter der Abdeckwand (34) es den ersten und zweiten seitlichen Teilströmen aus der zweiten Elastomermischung (F1_M2, F2_M2) ermöglicht, sich auf der Einlage (33) zu schließen und so den Einbindegraben (14) auszufüllen.

2. Anlage nach Anspruch 1, **dadurch gekennzeichnet, dass** der Abstreifabstand (H23) gleich null ist, so dass, in dem zweiten Kopfabschnitt (20), der Abstreifer (23) gegen die Aufnahmefläche (5) reibt, so dass die Restschicht aus der ersten Elastomermischung (M1) am Boden des Einbindegrabens (14) entfernt wird, um es dem Injektor (31) des dritten Kopfabschnitts (30) zu ermöglichen, die Einlage (33) aus der dritten Elastomermischung (M3) in Kontakt mit der Aufnahmefläche (5) abzulegen.

3. Anlage nach Anspruch 1 oder 2, **dadurch gekennzeichnet, dass** der Injektor (31) so gestaltet ist, dass der Punkt der Injektionsmündung (32), der am weitesten von der Aufnahmefläche (5) entlang der vertikalen Richtung (Z)entfernt ist und der somit dem Scheitelpunkt der Einlage (33A) entspricht, in einem vertikalen Abstand ungleich null von der Abdeckwand (34), "Einbindungstiefe" (P31) genannt, positioniert ist, so dass der erste seitliche Strom aus der zweiten Elastomermischung (F1_M2) und der zweite seitliche Strom aus der zweiten Elastomermischung (F2_M2) zusammentreffen und in dem Raum, der vertikal zwischen dem Scheitelpunkt der Einlage (33A) und der Abdeckwand (34) enthalten ist, verschmelzen können, um die Einlage (33) in der zweiten Elastomermischung (M2) in der Einbindetiefe (P31) einzubinden.

4. Anlage nach Anspruch 3, **dadurch gekennzeichnet, dass** die Einbindetiefe (P31) zwischen 3 mm und 8 mm, vorzugsweise zwischen 5 mm und 7 mm beträgt.

5. Anlage nach einem der vorhergehenden Ansprüche, **dadurch gekennzeichnet, dass** die Konfluenzlänge (L34), die von der Abdeckwand (34) bedeckt wird, zwischen 10 mm und 14 mm beträgt.

6. Anlage nach einem der vorhergehenden Ansprüche, **dadurch gekennzeichnet, dass** in dem ersten Kopfabschnitt (10) die Breite des Vorabstreifers (13), entlang der seitlichen Richtung (Y) betrachtet, im Stromauf-Stromab-Richtungssinn der Fließrichtung zunimmt.

7. Anlage nach einem der vorhergehenden Ansprüche, **dadurch gekennzeichnet, dass** in dem zweiten Kopfabschnitt (20) der Abstreifer (23) einen konvergierenden Abschnitt (23C) aufweist, der an den Injektor (31) anschließt und dessen Breite sich, entlang der seitlichen Richtung (Y) betrachtet, im Stromauf-Stromab-Richtungssinn der Fließrichtung verjüngt.

8. Anlage nach einem der vorhergehenden Ansprüche, **dadurch gekennzeichnet, dass** die Injektionsmündung (32) und infolgedessen der resultierende Querschnitt der Einlage (33) eine dreieckige Form aufweist, deren Grundseite (33B) zu der Aufnahmefläche (5) hin und deren Scheitelpunkt (33A) zu dem Extrusionskopf (4) hin ausgerichtet ist.

9. Anlage nach einem der vorhergehenden Ansprüche, **dadurch gekennzeichnet, dass** die Aufnahmefläche (5) durch ein Förderband gebildet wird, das translatorisch entlang der Längsrichtung (X) in Bezug auf den Extrusionskopf (4) angetrieben wird, oder, stärker bevorzugt, durch eine Walze (6), die in Bezug auf den Extrusionskopf (4) um ihre Mittelachse (Y6) drehangetrieben wird, die parallel zu der seitlichen Richtung (Y) ist.

10. Verfahren zur Herstellung eines Profils (2), **dadurch gekennzeichnet, dass** man mittels eines Vorabstreifers (13) einen Einbindegraben (14) in einer ersten Elastomermischung (M1) bildet, aus der eine Teilschicht (12) des Profils (2) besteht, man dann eine zweite Elastomermischung (M2) zuführt, um die Teilschicht (12) zu bedecken, wobei dank eines Abstreifers (23) der Einbindegraben (14) in den ersten und zweiten Elastomermischungen (M1, M2) beibehalten wird, man dann in dem Einbindegraben (14) eine dritte Elastomermischung (M3) aufbringt, aus der eine Einlage (33) besteht, man dann die zweite Elastomermischung (M2) den Einbindegraben (14) ausfüllen lässt, um die Einlage (33) zu umhüllen.

11. Verfahren nach Anspruch 10, **dadurch gekennzeichnet, dass** die zweite Elastomermischung (M2) den Einbindegraben (14) und die Einlage (33) so bedeckt, dass der Scheitelpunkt der Einlage (33) in einer Einbindetiefe (P31) ungleich null, vorzugsweise zwischen 3 mm und 8 mm, eingebunden wird.

12. Verfahren nach Anspruch 10 oder 11, **dadurch gekennzeichnet, dass** das Profil (2) dazu bestimmt ist, einen Laufstreifen eines Reifens für ein Fahrzeugrad zu bilden, dass, in dem Profil (2), die erste Elastomermischung (M1) eine Teilschicht (12) bildet, die auf einer Scheitelverstärkung des Reifens fixiert wird, die zweite Elastomermischung (M2) dazu bestimmt ist, Profilblöcke (22) zu bilden, die in Kontakt mit der Fahrbahn gelangen, und die Einlage (33) aus der dritten Elastomermischung (M3) dazu bestimmt ist, einen umfänglichen Festigkeitsträger in dem Laufstreifen zu bilden, und dadurch, dass der komplexe dynamische Schubmodul (G*_M3) der dritten Elastomermischung (M3) strikt größer als der komplexe dynamische Schubmodul (G*_M2) der zweite Elastomermischung (M2) ist.

13. Verfahren zur Herstellung eines Reifens für ein Fahrzeugrad, bei dem nach dem Verfahren des Anspruchs 12 ein Profil (2) hergestellt wird und das Profil (2) verwendet wird, um den Laufstreifen des Reifens zu bilden.

14. Verfahren zur Herstellung eines Reifens für ein Fahrzeugrad nach Anspruch 13, **dadurch gekennzeichnet, dass** man in mindestens einen der Profilblöcke (22), die in der zweiten Elastomermischung (M2) gebildet sind, mindestens einen Verschleißanzeiger (50) einarbeitet, der es ermöglicht, den Verschleißzustand des Reifens zu überwachen, und dadurch, dass der Scheitelpunkt (33A) der Einlage (33), die aus der dritte Elastomermischung (M3) gebildet wird, eine Höhe (H33) in Bezug auf die Aufnahmefläche (5) und entlang der vertikalen Richtung (Z) aufweist, die strikt kleiner als die Höhe (H50) des Verschleißanzeigers (50) ist, so dass, wenn der Reifen in Betrieb ist, man zu dem Verschleißanzeiger (50) gelangt, bevor man den Scheitelpunkt (33A) der in den mindestens einen der Profilblöcke (22) eingebundenen Einlage freilegt.

15. Verfahren zur Herstellung eines Reifens für ein Fahrzeugrad nach Anspruch 13 oder 14, **dadurch gekennzeichnet, dass** das ausgeführte Profil (2) mindestens einen Profilblock (22) umfasst, der entlang der seitlichen Richtung (Y) durch mindestens einen seitlichen Rand (22L, 22R) begrenzt wird und der eine Einlage (33) umfasst, die in den Profilblock (22) im Abstand von dem mindestens einen seitlichen Rand (22L, 22R) eingebunden ist, und dadurch, dass man einen Hilfsfestigkeitsträger (52), bevorzugt mit dreieckigem Querschnitt, gegen den mindestens einen seitlichen Rand (22L, 22R) des Profilblocks (22) hinzufügt.

## Claims

1. Coextrusion installation (1) intended for generating a profiled element (2) by conjointly extruding a plurality of elastomeric compounds (M1, M2, M3) along a shared flow direction which corresponds to the longitudinal direction (X) of the said profiled element (2), the said installation comprising an extrusion head (4) which feeds the said elastomeric compounds (M1, M2, M3), and a receiving surface (5), such as a roller (6), which is positioned facing the extrusion head (4) in order to define a gap (3) serving to shape the cross section of the profiled element (2), in terms of thickness (H2) along a direction referred to as "vertical direction" (Z), which is perpendicular to the longitudinal direction (X) and to the receiving surface (5), and in terms of width (W2) along a direction referred to as "lateral direction" (Y), which is perpendicular to the longitudinal direction (X) and to the vertical direction (Z), the said installation (1) being **characterized in that** the extrusion head (4) comprises, from upstream to downstream along the flow direction:
- first of all a first head portion (10), which is provided with one or more first intake channels (11) leading into the gap (3) in order to bring a first elastomeric compound (M1), intended to form a sublayer (12) of the profiled element (2), into contact with the receiving surface (5), the said first head portion (10) also comprising at least one pre-scraper (13) which projects vertically into the gap (3) with delimitation, along the lateral direction (Y), by a first lateral face (13L) and a second lateral face (13R), and, along the vertical direction (Z), by a lower face (13B) which faces towards the receiving surface (5) with positioning at a first predetermined, non-zero distance (H13) from the said receiving surface, referred to as "pre-scraping thickness" (H13), such that the said pre-scraper (13) can reserve, within the stream of the first elastomeric compound (M1), a trench referred to as "embedding trench" (14) which is bordered for the one part laterally by a first lateral substream (F1_M1) of the said first elastomeric compound (M1) and by a second lateral substream (F2_M1) of the said first elastomeric compound (M1), which first and second lateral substreams (F1_M1, F2_M1) flow on either side of the pre-scraper (13), along the first lateral face (13L) and along the second lateral face (13R) of the said pre-scraper respectively, and for the other part vertically by a bottom substream (F3_M1) which flows between the receiving surface (5) and the lower face (13B) of the pre-scraper (13), in the pre-scraping thickness (H13), to form a residual layer (15) of first elastomeric compound (M1),
- then a second head portion (20) which is provided with one or more second intake channels (21) which lead into the gap (3) in order to feed a second elastomeric compound (M2) intended to cover the sublayer (12) of first elastomeric compound (M1) coming from the first head portion (10), the said second head portion comprising at least one scraper (23) which extends in the longitudinal continuation of the pre-scraper (13), and which projects vertically into the gap (3) so as to have a first lateral face (23L), a second lateral face (23R), and a lower face (23B) which faces towards the receiving surface (5), at a second vertical distance (H23) from the said receiving surface (5) referred to as "scraping thickness" (H23) which is strictly less than the pre-scraping thickness (H13), such that, for the one part, the said scraper (23) can laterally preserve the embedding trench (14) by making the stream of second elastomeric compound (M2) form a first lateral substream (F1_M2) of second elastomeric compound and a second lateral substream (F2_M2) of second elastomeric compound, which flow along the first lateral face (23L) and along the second lateral face (23R) respectively of the said scraper and which form an added thickness of the first and the second lateral substream (F1_M1, F2_M2) of first elastomeric compound respectively, which come from the first head portion (10), whereas, for the other part, the said scraper (23) makes it possible to vertically deepen the embedding trench (14) with a reduction, in accordance with the scraping thickness (H23), in the thickness of the residual layer of first elastomeric compound (M1) at the bottom of the said embedding trench (14),
- and then a third head portion (30) comprising at least one injector (31) which projects into the gap (3), in the longitudinal continuation of the scraper (23), and which has an injection opening (32) intended to inject a third elastomeric compound (M3), distinct from the second elastomeric compound (M2), so as to form an insert (33) in the embedding trench (14), the said third head portion (30) further comprising, following the injector (31) in the longitudinal direction (X), a covering wall (34) which extends over a predetermined length referred to as "confluence length" (L34) along the longitudinal direction (X), from the injection opening (32) to the outlet of the gap (3), in order that the flow of the profiled element (2) below the said covering wall (34) allows the first and second lateral substreams (F1_M2, F2_M2) of second elastomeric compound to close up over the insert (33), thus filling the embedding trench (14).

2. Installation according to Claim 1, **characterized in that** the scraping distance (H23) is zero, such that, in the second head portion (20), the scraper (23) rubs against the receiving surface (5) so as to eliminate the residual layer of first elastomeric compound (M1) at the bottom of the embedding trench (14), in order to allow the injector (31) of the third head portion (30) to place the insert (33) made of third elastomeric compound (M3) in contact with the receiving surface (5).

3. Installation according to Claim 1 or 2, **characterized in that** the injector (31) is arranged so as to position the point of the injection opening (32) that is furthest away from the receiving surface (5), along the vertical direction (Z), and that thus corresponds to the apex (33A) of the insert, at a non-zero vertical distance from the covering wall (34), referred to as "embedding depth" (P31), such that the first lateral stream (F1_M2) of second elastomeric compound and the second lateral stream (F2_M2) of second elastomeric compound can meet and fuse in the space which is vertically comprised between the apex (33A) of the insert and the covering wall (34), in order to embed the said insert (33) in the second elastomeric compound (M2) at the said embedding depth (P31).

4. Installation according to Claim 3, **characterized in that** the embedding depth (P31) is comprised between 3 mm and 8 mm, preferably between 5 mm and 7 mm.

5. Installation according to one of the preceding claims, **characterized in that** the confluence length (L34) covered by the covering wall (34) is comprised between 10 mm and 14 mm.

6. Installation according to one of the preceding claims, **characterized in that**, in the first head portion (10), the width of the pre-scraper (13), considered along the lateral direction (Y), increases from upstream to downstream in the flow direction.

7. Installation according to one of the preceding claims, **characterized in that**, in the second head portion (20), the scraper (23) has a convergent portion (23C) which connects to the injector (31) and the width of which, considered along the lateral direction (Y), narrows from upstream to downstream in the flow direction.

8. Installation according to one of the preceding claims, **characterized in that** the injection opening (32), and consequently the resultant cross section of the insert (33), has a triangular shape, of which the base (33B) is oriented towards the receiving surface (5) and the apex (33A) is oriented towards the extrusion head (4).

9. Installation according to one of the preceding claims, **characterized in that** the receiving surface (5) is formed by a conveyor belt driven in a translational movement along the longitudinal direction (X) in relation to the extrusion head (4) or, more preferably, by a roller (6) which is driven in rotation in relation to the extrusion head (4), about its central axis (Y6) which is parallel to the lateral direction (Y).

10. Method for manufacturing a profiled element (2), **characterized in that** a pre-scraper (13) is used to open an embedding trench (14) in a first elastomeric compound (M1) making up a sublayer (12) of the profiled element (2), then a second elastomeric compound (M2) is fed so as to cover the said sublayer (12), whilst still preserving the embedding trench (14) within the first and second elastomeric compounds (M1, M2) by virtue of a scraper (23), then a third elastomeric compound (M3) making up an insert (33) is deposited in the said embedding trench (14), and then the second elastomeric compound (M2) is allowed to fill the said embedding trench (14) in order to coat the insert (33).

11. Method according to Claim 10, **characterized in that** the second elastomeric compound (M2) covers the embedding trench (14) and the insert (33) so as to embed the apex of the said insert (33) to a non-zero embedding depth (P31) preferably comprised between 3 mm and 8 mm.

12. Method according to Claim 10 or 11, **characterized in that** the profiled element (2) is intended to form a tread of a tyre for a vehicle wheel, **in that**, within the said profiled element (2), the first elastomeric compound (M1) forms a sublayer (12) intended to be secured to a crown reinforcement of the tyre, the second elastomeric compound (M2) is intended to form tread pattern blocks (22) that come into contact with the road, and the insert (33) made of third elastomeric compound (M3) is intended to form a circumferential reinforcer within the tread, and **in that** the complex dynamic shear modulus (G*_M3) of the third elastomeric compound (M3) is strictly greater than the complex dynamic shear modulus (G*_M2) of the second elastomeric compound (M2).

13. Method for manufacturing a tyre for a vehicle wheel, in the course of which method a profiled element (2) is manufactured according to the method of Claim 12 and the said profiled element (2) is used to form the tread of the said tyre.

14. Method for manufacturing a tyre for a vehicle wheel according to Claim 13, **characterized in that** at least one wear indicator (50) for monitoring the state of wear of the tyre is shaped in at least one of the tread pattern blocks (22) formed in the second elastomeric compound (M2), and **in that** the apex (33A) of the insert (33) formed from the third elastomeric compound (M3) has a height (H33), in relation to the receiving surface (5) and along the vertical direction (Z), which is strictly less than the height (H50) of the said wear indicator (50) such that, when the tyre is in use, the wear indicator (50) is reached before the apex (33A) of the insert embedded in the at least one of the tread pattern blocks (22) is uncovered.

15. Method for manufacturing a tyre for a vehicle wheel according to Claim 13 or 14, **characterized in that** the profiled element (2) produced comprises at least one tread pattern block (22) which is delimited along the lateral direction (Y) by at least one lateral edge (22L, 22R) and which comprises an insert (33) embedded in the said tread pattern block (22) at a distance from the said at least one lateral edge (22L, 22R), and **in that** an auxiliary reinforcer (52), preferably of triangular cross section, is added against the said at least one lateral edge (22L, 22R) of the tread pattern block (22).
